# EUROPEAN PATENT SPECIFICATION

(11) **EP 3 069 474 B1**
(45) Date of publication and mention of the grant of the patent: **11.03.2020**
(21) Application number: 13795703.1
(22) Date of filing: 15.11.2013
(51) Int. Cl.: H04L 12/24

(54) **CORRELATION OF EVENT REPORTS**
KORRELATION VON EREIGNISBERICHTEN
CORRÉLATION DE COMPTES RENDUS D'ÉVÉNEMENTS

(43) Date of publication of application: 21.09.2016
(73) Proprietor: Nokia Solutions and Networks Oy, 02610 Espoo (FI)
(72) Inventor: HIRSCH, Lucian, 81373 Munich (DE)
(74) Representative: Nokia EPO representatives
(86) International application number: PCT/EP2013/073937
(87) International publication number: WO 2015/070917

(56) References cited:
- WO-A1-2012/116716
- US-A1- 2013 094 519

## Description

### Field of the invention

The present invention relates to an apparatus, a method, and a computer program product related to event reporting. More particularly, the present invention relates to an apparatus a method, and a computer program product related to correlated event reporting.

### Background of the invention

### Abbreviations

- ▪ 3GPP: 3rd Generation Partnership Program
- ▪ ATM: Asynchronous Transfer Mode
- ▪ CDMA: Code Division Multiplex Access
- ▪ Cs: Indicates a Customer specific defined object class
- ▪ EDGE: Enhanced Data Rates for GSM Evolution
- ▪ EM: Element Management
- ▪ EMS: Element Management System (Element Manager)
- ▪ E-UTRAN: Evolved Universal Terrestrial Radio Access Network
- ▪ eNB: evolved Node B
- ▪ GSM: Global System for Mobile Communications
- ▪ Itf-N: Northbound management Interface
- ▪ LAN: Local Area Network
- ▪ LTE: Long term Evolution
- ▪ LTE-A: LTE-Advanced
- ▪ NE: Network Element
- ▪ NM: Network Management
- ▪ NMS: Network Management System (Network Manager)
- ▪ NRM: Network Resource Model
- ▪ OMC: Operations and Maintenance Centre
- ▪ PSTN: Public Switched Telephone Network
- ▪ TMN: Telecommunication Management Network
- ▪ TS: Technical Specification
- ▪ UMTS: Universal Mobile Telecommunication System
- ▪ Vs: Indicates a Vendor specific defined object class
- ▪ WAN: Wide Area Network
- ▪ WiFi: Wireless Fidelity

The TMN principles define several layers for the hierarchical management of telecommunication networks, while each layer may play a dual role:
▪ *Manager* role (in "*managing system*") for the subordinate layer (if available)
▪ *Agent* role (in "*managed system*") for the next higher layer (if available).

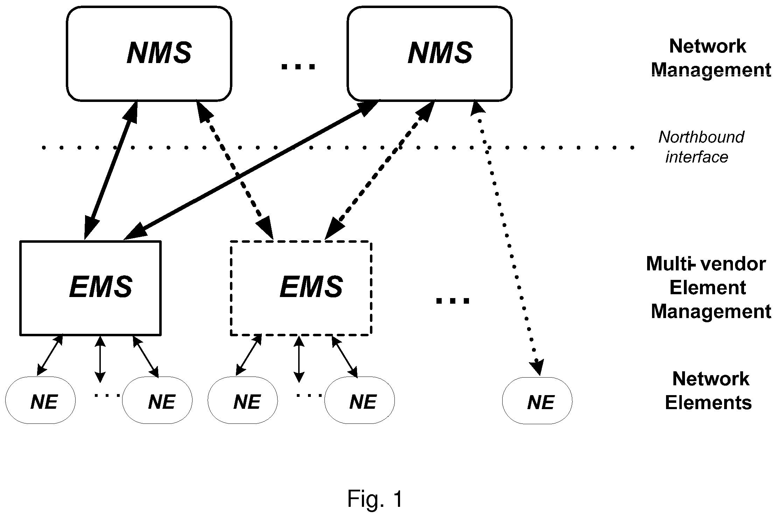

For the day-to-day management of telecommunication networks usually two management layers are of special relevance (see Fig. 1):
▪ The "*Network Management*" layer, whose functionality is provided by a Network Management Systems (NMS). In order to achieve a functional integration of different network regions (usually supervised by different, vendor-specific equipment) into a NMS integrating EMS of several vendors, the interface between NMS and the (regional) Element Manager Systems (EMS), so-called northbound interface (Itf-N) is in most cases vendor-independent. There may be one or more NMS connected to each of the EMS.
▪ The "*Network Element Management*" layer, whose functionality is provided by a (vendor-specific) Element Manager System (EMS, named also OMC) usually delivered by the same manufacturer as the managed Network Elements (NEs). The EMS plays a manager role with regard to the supervised network elements and provides agent functionality for the superior NMS.

In some cases, a NE is directly managed by the NMS (right NE in Fig. 1).

Prior art which is related to this field of technology can be found e.g. in document WO 2012/116716 A1 disclosing a technique for determining correlated events in a communication system.

### Summary of the invention

It is an object of the present invention to improve the prior art. In particular, it is an object to improve network supervision and/or network maintenance at NMS level.

According to a first aspect of the invention, there is provided an apparatus, comprising checking means adapted to check if a notification identifier comprised by a received primary notification and a correlation identifier comprised by a received secondary notification match each other, wherein the primary notification is different from the secondary notification; correlation generating means adapted to generate, if the notification identifier and the correlation identifier match each other, a correlation indication; providing means adapted to provide, to a management device, if the notification identifier and the correlation identifier match each other, a primary forward status change indication generated based on a primary status change indication comprised in the primary notification, a secondary forward status change indication generated based on a secondary status change indication comprised in the secondary notification, and the correlation indication.

In the apparatus, the primary entity may be a physical device and the secondary entity may be a logical entity.

In the apparatus, at least one of the primary status change and the secondary status change may be a change of an alarm status.

In the apparatus, at least one of the primary status change and the secondary status change may be a change of an operational state or a change of an administrative state.

The apparatus may further comprise identification generating means adapted to generate a forward notification identification and a forward correlation identification as the correlation indication, wherein the forward correlation identification matches the forward notification identification; wherein the providing means may be adapted to provide the primary forward status change indication and the forward notification identification in a primary forward notification and to provide the secondary forward status change indication and the forward correlation identifier in a following secondary forward notification.

In the apparatus, the primary forward notification may comprise a notification of an alarm, and the secondary forward notification may comprise one of a notification of a state change and a notification of an artificial alarm.

In the apparatus, each of the primary forward notification and the secondary forward notification may comprise a respective notification of a state change.

In the apparatus, the providing means may be adapted to provide the primary forward status change indication, the secondary forward status change indication, and the correlation indication in a single forward notification.

In the apparatus, the single forward notification may comprise a notification of an alarm or a notification of a state change.

The apparatus may further comprise timer means adapted to determine an elapsed time after the timer means has been triggered; forward identification generating means adapted to generate a primary forward entity identification based on a match of a received identification of the primary entity comprised by the primary notification and at least one predefined identification stored in a data repository; deciding means adapted to decide whether or not the received identification matches at least one of the predefined identifications; triggering means adapted to trigger the timer means if at least one of the following takes place: the primary notification is received, and the deciding means has decided that the received identification does not match any of the at least one predefined identification; monitoring means adapted to monitor if the secondary notification is received when the elapsed time does not exceed a predefined time-out value; wherein the forward identification generating means may be further adapted to generate, if the secondary notification is received when the elapsed time does not exceed the time-out value, the primary forward entity identification based on the received primary notification, the received secondary notification, and one of the predefined identifications, and/or to generate, if the elapsed time exceeds the time-out value before the secondary notification is received, the primary forward entity identification based on the received primary identification and a default mapping; and the providing means may be adapted to provide the primary forward entity identification together with the primary forward status change indication.

According to a second aspect of the invention, there is provided an apparatus, comprising checking processor adapted to check if a notification identifier comprised by a received primary notification and a correlation identifier comprised by a received secondary notification match each other, wherein the primary notification is different from the secondary notification; correlation generating processor adapted to generate, if the notification identifier and the correlation identifier match each other, a correlation indication; providing processor adapted to provide, to a management device, if the notification identifier and the correlation identifier match each other, a primary forward status change indication generated based on a primary status change indication comprised in the primary notification, a secondary forward status change indication generated based on a secondary status change indication comprised in the secondary notification, and the correlation indication.

In the apparatus, the primary entity may be a physical device and the secondary entity may be a logical entity.

In the apparatus, at least one of the primary status change and the secondary status change may be a change of an alarm status.

In the apparatus, at least one of the primary status change and the secondary status change may be a change of an operational state or a change of an administrative state.

The apparatus may further comprise identification generating processor adapted to generate a forward notification identification and a forward correlation identification as the correlation indication, wherein the forward correlation identification matches the forward notification identification; wherein the providing processor may be adapted to provide the primary forward status change indication and the forward notification identification in a primary forward notification and to provide the secondary forward status change indication and the forward correlation identifier in a following secondary forward notification.

In the apparatus, the primary forward notification may comprise a notification of an alarm, and the secondary forward notification may comprise one of a notification of a state change and a notification of an artificial alarm.

In the apparatus, each of the primary forward notification and the secondary forward notification may comprise a respective notification of a state change.

In the apparatus, the providing processor may be adapted to provide the primary forward status change indication, the secondary forward status change indication, and the correlation indication in a single forward notification.

In the apparatus, the single forward notification may comprise a notification of an alarm or a notification of a state change.

The apparatus may further comprise timer processor adapted to determine an elapsed time after the timer processor has been triggered; forward identification generating processor adapted to generate a primary forward entity identification based on a match of a received identification of the primary entity comprised by the primary notification and at least one predefined identification stored in a data repository; deciding processor adapted to decide whether or not the received identification matches at least one of the predefined identifications; triggering processor adapted to trigger the timer processor if at least one of the following takes place: the primary notification is received, and the deciding processor has decided that the received identification does not match any of the at least one predefined identification; monitoring processor adapted to monitor if the secondary notification is received when the elapsed time does not exceed a predefined time-out value; wherein the forward identification generating processor may be further adapted to generate, if the secondary notification is received when the elapsed time does not exceed the time-out value, the primary forward entity identification based on the received primary notification, the received secondary notification, and one of the predefined identifications, and/or to generate, if the elapsed time exceeds the time-out value before the secondary notification is received, the primary forward entity identification based on the received primary identification and a default mapping; and the providing processor may be adapted to provide the primary forward entity identification together with the primary forward status change indication.

According to a third aspect of the invention, there is provided an element management system comprising the apparatus according to any of the first and second aspects and adapted to manage the primary entity and the secondary entity.

According to a fourth aspect of the invention, there is provided an apparatus, comprising deciding means adapted to decide if at least one received forward notification comprises a correlation indication indicating that a primary status change of a primary entity and a secondary status change of a secondary entity are correlated, wherein the primary status change is indicated by a primary forward status change indication comprised in the at least one received forward notification and the secondary status change is indicated by a secondary forward status change indication comprised in the at least one received forward notification; inhibiting means adapted to inhibit triggering a secondary maintenance activity based on the secondary forward status change indication if the at least one received forward notification comprises the correlation indication.

The apparatus may further comprise triggering means adapted to trigger a primary maintenance activity based on the primary forward status change indication.

In the apparatus, the secondary entity may be a logical entity and the primary entity may be a physical device.

In the apparatus, at least one of the secondary status change and the primary status change may be a change of an alarm status.

In the apparatus, at least one of the secondary status change and the primary status change may be a change of an operational state or a change of an administrative state.

In the apparatus, the at least one received forward notification may comprise a received secondary forward notification and a received primary forward notification, wherein the secondary forward identification comprises the secondary forward entity identification, the secondary forward status change indication, and a forward correlation identification, and the primary forward notification further comprises the primary forward entity identification, the primary forward status change indication, and a forward notification identification; and the deciding means may be adapted to decide that the at least one received forward notification comprises the correlation indication if the forward notification identification matches the forward correlation identification.

In the apparatus, the primary forward notification may comprise a notification of an alarm, and the secondary forward notification may comprise one of a notification of a state change and a notification of an artificial alarm.

In the apparatus, each of the secondary forward notification and the primary forward notification may comprise a respective notification of a state change.

In the apparatus, the obtaining means may be adapted to obtain the primary forward status change indication and the secondary forward status change indication from only a single forward notification being the at least one forward notification.

In the apparatus, the single forward notification may comprise a notification of an alarm or a notification of a state change.

According to a fifth aspect of the invention, there is provided an apparatus, comprising deciding processor adapted to decide if at least one received forward notification comprises a correlation indication indicating that a primary status change of a primary entity and a secondary status change of a secondary entity are correlated, wherein the primary status change is indicated by a primary forward status change indication comprised in the at least one received forward notification and the secondary status change is indicated by a secondary forward status change indication comprised in the at least one received forward notification; inhibiting processor adapted to inhibit triggering a secondary maintenance activity based on the secondary forward status change indication if the at least one received forward notification comprises the correlation indication.

The apparatus may further comprise triggering processor adapted to trigger a primary maintenance activity based on the primary forward status change indication.

In the apparatus, the secondary entity may be a logical entity and the primary entity may be a physical device.

In the apparatus, at least one of the secondary status change and the primary status change may be a change of an alarm status.

In the apparatus, at least one of the secondary status change and the primary status change may be a change of an operational state or a change of an administrative state.

In the apparatus, the at least one received forward notification may comprise a received secondary forward notification and a received primary forward notification, wherein the secondary forward identification comprises the secondary forward entity identification, the secondary forward status change indication, and a forward correlation identification, and the primary forward notification further comprises the primary forward entity identification, the primary forward status change indication, and a forward notification identification; and the deciding processor may be adapted to decide that the at least one received forward notification comprises the correlation indication if the forward notification identification matches the forward correlation identification.

In the apparatus, the primary forward notification may comprise a notification of an alarm, and the secondary forward notification may comprise one of a notification of a state change and a notification of an artificial alarm.

In the apparatus, each of the secondary forward notification and the primary forward notification may comprise a respective notification of a state change.

In the apparatus, the obtaining processor may be adapted to obtain the primary forward status change indication and the secondary forward status change indication from only a single forward notification being the at least one forward notification.

In the apparatus, the single forward notification may comprise a notification of an alarm or a notification of a state change.

According to a sixth aspect of the invention, there is provided a network management system comprising the apparatus according to any of the fourth and fifth aspects and adapted to receive the at least one forward notification from an element management system or network element configured to manage the secondary entity and the primary entity.

According to a seventh aspect of the invention, there is provided a method, comprising checking if a notification identifier comprised by a received primary notification and a correlation identifier comprised by a received secondary notification match each other, wherein the primary notification is different from the secondary notification; generating, if the notification identifier and the correlation identifier match each other, a correlation indication; providing, to a management device, if the notification identifier and the correlation identifier match each other, a primary forward status change indication generated based on a primary status change indication comprised in the primary notification, a secondary forward status change indication generated based on a secondary status change indication comprised in the secondary notification, and the correlation indication.

In the method, the primary entity may be a physical device and the secondary entity may be a logical entity.

In the method, at least one of the primary status change and the secondary status change may be a change of an alarm status.

In the method, at least one of the primary status change and the secondary status change may be a change of an operational state or a change of an administrative state.

The method may further comprise generating a forward notification identification and a forward correlation identification as the correlation indication, wherein the forward correlation identification matches the forward notification identification; and providing the primary forward status change indication and the forward notification identification in a primary forward notification and providing the secondary forward status change indication and the forward correlation identifier in a following secondary forward notification.

In the method, the primary forward notification may comprise a notification of an alarm, and the secondary forward notification may comprise one of a notification of a state change and a notification of an artificial alarm.

In the method, each of the primary forward notification and the secondary forward notification may comprise a respective notification of a state change.

The method may comprise providing the primary forward status change indication, the secondary forward status change indication, and the correlation indication in a single forward notification.

In the method, the single forward notification may comprise a notification of an alarm or a notification of a state change.

The method may further comprise determining an elapsed time after a trigger occurred; generating a primary forward entity identification based on a match of a received identification of the primary entity comprised by the primary notification and at least one predefined identification stored in a data repository; deciding whether or not the received identification matches at least one of the predefined identifications; triggering the determining of the elapsed time if at least one of the following takes place: the primary notification is received, and it is decided that the received identification does not match any of the at least one predefined identification; monitoring if the secondary notification is received when the elapsed time does not exceed a predefined time-out value; generating, if the secondary notification is received when the elapsed time does not exceed the time-out value, the primary forward entity identification based on the received primary notification, the received secondary notification, and one of the predefined identifications, and/or generating, if the elapsed time exceeds the time-out value before the secondary notification is received, the primary forward entity identification based on the received primary identification and a default mapping; and providing the primary forward entity identification together with the primary forward status change indication.

According to an eighth aspect of the invention, there is provided a method, comprising deciding if at least one received forward notification comprises a correlation indication indicating that a primary status change of a primary entity and a secondary status change of a secondary entity are correlated, wherein the primary status change is indicated by a primary forward status change indication comprised in the at least one received forward notification and the secondary status change is indicated by a secondary forward status change indication comprised in the at least one received forward notification; inhibiting triggering a secondary maintenance activity based on the secondary forward status change indication if the at least one received forward notification comprises the correlation indication.

The method may further comprise triggering a primary maintenance activity based on the primary forward status change indication.

In the method, the secondary entity may be a logical entity and the primary entity may be a physical device.

In the method, at least one of the secondary status change and the primary status change may be a change of an alarm status.

In the method, at least one of the secondary status change and the primary status change may be a change of an operational state or a change of an administrative state.

In the method, the at least one received forward notification may comprise a received secondary forward notification and a received primary forward notification, wherein the secondary forward identification comprises the secondary forward entity identification, the secondary forward status change indication, and a forward correlation identification, and the primary forward notification further comprises the primary forward entity identification, the primary forward status change indication, and a forward notification identification; and the method may comprise deciding that the at least one received forward notification comprises the correlation indication if the forward notification identification matches the forward correlation identification.

In the method, the primary forward notification may comprise a notification of an alarm, and the secondary forward notification may comprise one of a notification of a state change and a notification of an artificial alarm.

In the method, each of the secondary forward notification and the primary forward notification may comprise a respective notification of a state change.

The method may further comprise obtaining the primary forward status change indication and the secondary forward status change indication from only a single forward notification being the at least one forward notification.

In the method, the single forward notification may comprise a notification of an alarm or a notification of a state change.

Each of the methods of the seventh and eighth aspects may be a method of correlation of event reports.

According to a ninth aspect of the invention, there is provided a computer program product comprising a set of instructions which, when executed on an apparatus, is configured to cause the apparatus to carry out the method according to any one of the seventh and eighth aspects. The computer program product may be embodied as a computer-readable medium or directly loadable into a computer.

According to some embodiments of the invention, at least one of the following main advantages may be achieved:
- Event flood at NMS level (for example alarm notifications, state change notifications) is reduced but information about impacted resources is still provided;
- No alarm information is lost for NMS;
- Quality of the alarms at NMS is enhanced;
- Root cause analysis at NMS level is simplified and efficiency of network supervision increased;
- Embodiments of the invention may be adapted to the capabilities of the NMS; and
- Embodiments of the invention may be adapted to different object models at the Itf-N.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein
Figure 1 shows a Network management hierarchy example;
Figure 2 shows a mapping and correlation of events in case of physical resource failure with standard-defined Itf-N object model and NMS supporting state change notifications according to an embodiment of the invention;
Figure 3 shows a mapping and correlation of events in case of physical resource failure with customer-specific Itf-N object model and NMS supporting state change notifications according to an embodiment of the invention;
Figure 4 shows a mapping and correlation of events in case of redundant physical resource failure with standard-defined Itf-N object model and NMS supporting state change notifications according to an embodiment of the invention;
Figure 5 shows a mapping and correlation of events in case of redundant physical resource failure with customer-specific Itf-N object model and NMS supporting state change notifications according to an embodiment of the invention;
Figure 6 shows a mapping and correlation of events in case of physical resource locking with standard-defined Itf-N object model and NMS supporting state change notifications according to an embodiment of the invention;
Figure 7 shows a mapping and correlation of events in case of physical resource locking with customer-specific Itf-N object model and NMS supporting state change notifications according to an embodiment of the invention;
Figure 8 shows a mapping and correlation of events in case of physical resource failure with standard-defined Itf-N object model and NMS not supporting state change notifications according to an embodiment of the invention;
Figure 9 shows a mapping and correlation of events in case of physical resource failure with customer-specific Itf-N object model and NMS not supporting state change notifications according to an embodiment of the invention;
Figure 10 shows a mapping and correlation of events in case of redundant physical resource failure with standard-defined Itf-N object model and NMS not supporting state change notifications according to an embodiment of the invention;
Figure 11 shows a mapping and correlation of events in case of redundant physical resource failure with customer-specific Itf-N object model and NMS not supporting state change notifications according to an embodiment of the invention;
Figure 12 shows a mapping and correlation of events in case of physical resource locking with standard-defined Itf-N object model and NMS not supporting state change notifications according to an embodiment of the invention;
Figure 13 shows a mapping and correlation of events in case of physical resource locking with customer-specific Itf-N object model and NMS not supporting state change notifications according to an embodiment of the invention;
Figure 14 shows a unified algorithm used by Itf-N agent according to an embodiment of the invention;
Figure 15 shows an apparatus according to an embodiment of the invention;
Figure 16 shows a method according to an embodiment of the invention;
Figure 17 shows an apparatus according to an embodiment of the invention;
Figure 18 shows a method according to an embodiment of the invention; and
Figure 19 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

In the area of **network assurance**, one of the most critical topics network operators need to cope with every day is the flood of event reports (mostly alarms), quite often without precise information about the real source (so-called "root cause") of the problem and also without correlation between the received messages. Some studies based on the feedback received from network operators emphasize the most significant weaknesses of the current management solutions:
- about 90% of the trouble tickets are generated by only a small subset of alarms, i.e. several alarms are not used at all;
- 40% of the alarms are redundant as they relate to the same "fault";
- missing correlation between event reports generated by physical resources and subsequent event reports emphasizing impacted (dependent) logical resources.

In the current literature, the problems regarding the flood of event reports and the poor correlation between different event types in the network assurance area are recognized, but concrete solutions able to solve this topic in a way independent of the used object model and also independent of NMS capabilities to support state change notifications (in addition to already supported alarm notifications) are not described.

In addition, the present standard-defined northbound interface object models (e.g. 3GPP TS 32.xxx series) do not foresee an abstraction of vendor-specific NE equipment-related resources. The consequence is that data provided to higher level management systems often do not include precise information needed by network management / network maintenance personnel for efficient and exhaustive network supervision and maintenance.

Most current Itf-N agent implementations do not provide any correlation between event reports forwarded to NMS. In addition, state change notifications are not supported at all.

Embodiments of the invention provide a solution able to remove such drawbacks and to allow for an optimal distribution of event reports to different operator groups (network maintenance / network optimization / customer care).

Under consideration of the fact that today network assurance is mostly done on NM level (offering to operators an end-to-end, mostly vendor-independent view of the whole network), embodiments of the invention provide an Itf-N agent in EMS in order to significantly improve:
a) the quality of the information forwarded to the NMS and therefore
b) the efficiency of the network management under consideration of various dependency relationships between managed resources.
EMS may be vendor-specific or capable to manage NEs of several vendors.

Some embodiments of the invention are particularly useful for the hierarchical management of mobile broadband networks, due to the large number of managed NEs and - as consequence - to the huge amount of expected event reports. In the area of network assurance, alarms and state change notifications are the most significant reported events.

According to 3GPP TS 32.111, an alarm is an abnormal network entity condition, which categorizes an event as a fault. A fault is a deviation of a system from normal operation, which may result in the loss of operational capabilities of the element or the loss of redundancy in case of a redundant configuration.

In terms of network management the state of a managed object represents the instantaneous condition of availability and operability of the associated network resource.

Three primary factors affect the management state of a managed object with regard to its corresponding resource's availability:
▪ operability: whether or not the resource is physically installed and able to provide the expected service;
▪ administration: permission to use or prohibition against using the resource, imposed through the management services; and
▪ usage: whether or not the resource is actively in use at a specific instant, and if so, whether or not it has spare capacity for additional users at that instant.

Alarms and state changes are notified by notifications to other entities (such as element managers and network management systems). Accordingly, changes of the states mentioned above are notified to management system(s) by means of operability state notification, administrative state notification and usage state notification, respectively. In contrast to state change notifications, alarms usually comprise a severity (such as critical, major, minor) depending how much the expected service of the element is affected by the fault and/or an indication of a specific problem.

In some embodiments, an important task of the Itf-N agent is the mapping between the vendor-specific object model supported by EMS and the (common) object model defined at the NMS-EMS interface for integration of multi-vendor equipment. In these embodiments, as far as possible, the notifications generated by vendor-specific resources shall be mapped (before their forwarding towards the managing NMS) to instances of "equivalent" object classes defined in the vendor-independent object model supported at Itf-N. Nevertheless, the Itf-N object models used by network operators for integration of equipment provided by several vendors vary, e.g.:
a) **It may be a standard-defined object model** (e.g. a 3GPP-specified "Network Resource Model"), which contains only logical (functional-related) resources. Here a simple mapping of an event report related to a vendor-specific equipment resource (e.g. board failure within an eNodeB) to a notification related to a logical resource (e.g. eNodeB) is not a proper solution, since:
   - NMS or the operator recognizes that there is a problem in an eNodeB, but is not aware about the real origin of it
   - in case of equipment redundancy such a failure does not impact at all the functionality of the related logical resource.
b) **It may be a customer-specific object model,** supporting generic equipment-related object classes (modeling e.g. the whole hardware equipment or a part of the hardware equipment of a network element) as well as logical-related object classes.

Another significant network assurance topic are different functionalities provided by the deployed NMS in customer networks. E.g. some NMS support state change notifications while other ones do not. According to embodiments of the invention, the Itf-N (supported by the agent) is adapted to the functionality provided by the respective NMS.

According to some embodiments of the invention, the Itf-N agent may fulfill one or more of the following requirements:
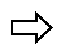 Minimize the number of alarm notifications forwarded to NM level, i.e. **for each fault not more than a single alarm may be generated.** For resources dependent on and impacted by the faulty ("primary") resource, only state change notifications shall be generated.
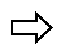 In the case the managing NMS does not support state change notifications or a mapping to "equivalent" instances is not possible, the Itf-N agent may generate so-called **"artificial" alarms** related to the dependent entity, whose parameter indicate alarm(s) and/or state change(s) of resource(s) on which the dependent entity depends. For example, these parameters may be values of the *specificProblem* field, or some additionally defined field for alarm notifications.
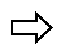 If the "primary" event report has no "equivalent" instance in the supported Itf-N object model, the event may be temporarily buffered and a related timer may be activated. This timer has the following role:
   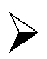 If a correlated event report is received during the pre-defined time-out value, the Itf-N agent may use the buffered event in order to "enhance" the correlated event, before mapping it in accordance to the algorithms defined in connection with the use cases described below. Subsequently the mapped event report may be forwarded to NMS and the timer may be reset.
   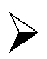 If expected correlated event report is not received during the pre-defined time-out value (i.e. time-out condition occurs), the Itf-N agent may perform a so-called "default" mapping of the "primary" event report (i.e. mapping to a high level instance in the Itf-N containment tree according to the used standardized or customer-proprietary object model) and forward the result to NMS, so that no event is lost for NMS level.
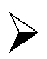 NMS or its operators are able to recognize the original network problem also in **cases when the "primary" event report is a state change notification** (e.g. locking a physical resource is "primary" event report) **and NMS does not support this notification type.** An unambiguous identification of the real origin of the problem ("primary" event report) and provision of correlation information between different notification types forwarded to NMS are ensured.
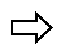 The management information forwarded to NMS can be used for both network supervision (focus on network's logical/functional view) and network maintenance (focus on network's equipment view), irrespective whether the object model type used at Itf-N is standard-defined or customer-specific.

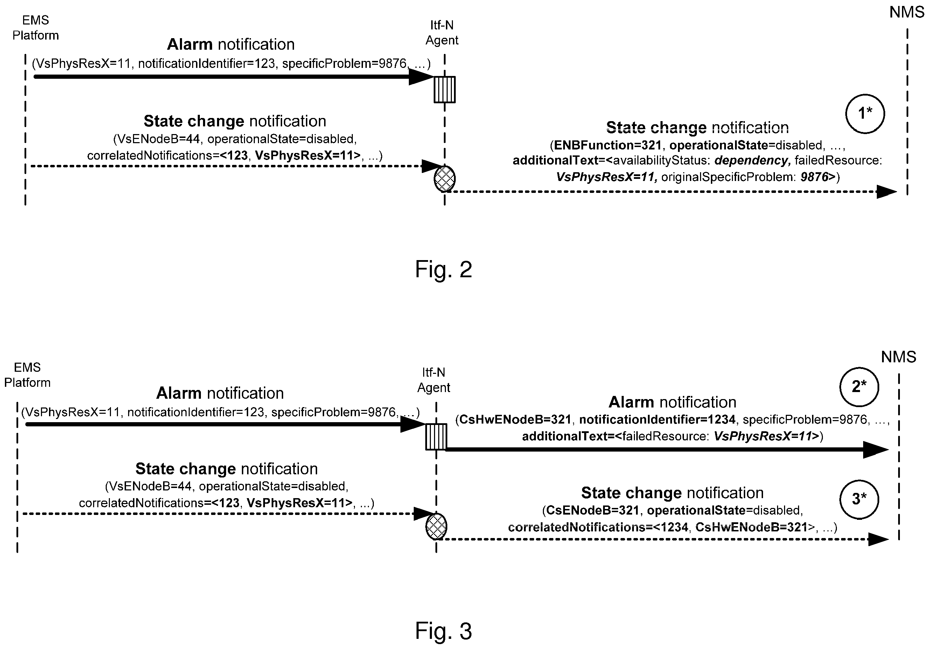

Hereinafter, handling of the following use cases according to some embodiments of the invention are described based on Figs. 2 to 13:
- The failure of a physical resource in a managed NE leads to a change of *operationalState* of a dependent logical resource (see use case 1 below)
- The failure of a **redundant** physical resource in a managed NE does not have any impact of a dependent logical resource (see use case 2 below)
- The operator-triggered locking (*administrativeState* set to "locked") of a physical resource in a managed NE leads to a change of *operationalState* of a dependent logical resource (see use case 3 below).

For each use case, a sequence diagram indicates the information flow from EMS to NMS together with the events mapping and correlation provided by the Itf-N agent under consideration of constraints like used Itf-N object model and NMS capability for supporting state change notifications.

In the following description of use cases for exemplification purposes the failure / locking of a physical resource within an eNodeB (eNB) is considered. The names of the used object classes (e.g. *VsPhysResX* indicating a Vendor-specific class name for a physical resource in eNB) and the values of the instances or other parameters in the notifications are arbitrarily chosen and not limiting the scope of the invention. Also, the names of the fields in the notifications are arbitrary or based on today's 3GPP standards, but may be different according to different standard or non-standard implementations.

The sequence diagrams contain only the notification parameters significant for the explanation of the respective use case. The notifications may comprise more parameters.

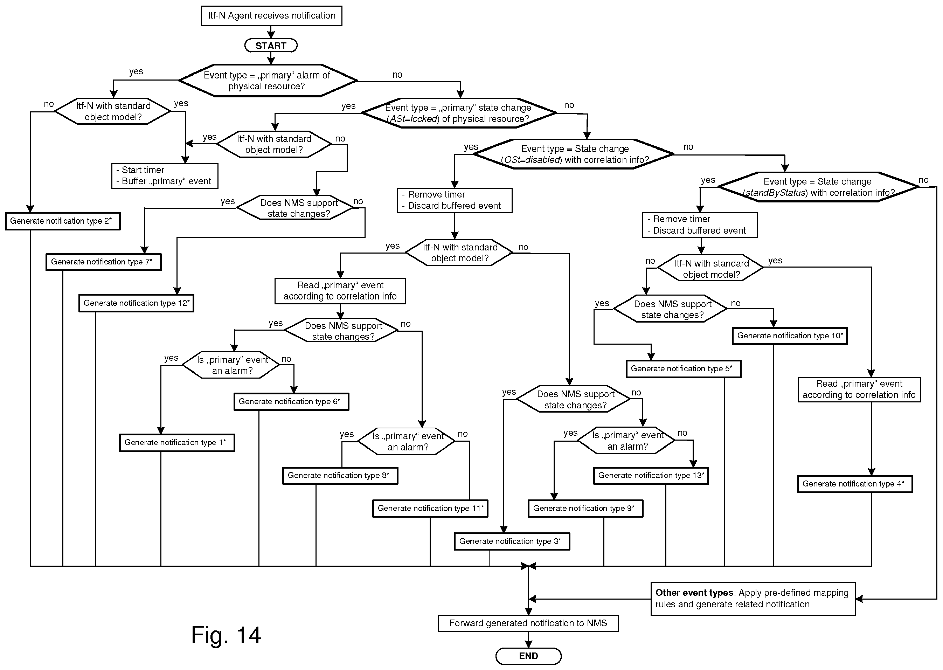

The number behind each mapped notifications in Figures 2...13 corresponds to the related number in Figure 14 which shows an overall implementation algorithm according to some embodiments of the invention.

Since the handling of an operator-triggered locking (administrativeState set to "locked") of a redundant physical resource is similar to the case described in use case 2 below, this use case is not additionally described.

For simplification, it is assumed for all use cases that a failure or locking of a physical resource ("primary" event) has an impact on only one logical resource. Nevertheless, embodiments of the invention may be correspondingly applied to cases where several (physical or logical) resources are impacted by one "primary" event.

In some embodiments of the invention, Itf-N agent may use a mapping table between the resources in the EMS internal object model and the corresponding ("equivalent") resources in the Itf-N object model (if any). In some embodiments, it may calculate the correspondences e.g. based on some predefined algorithm.

In some embodiments of the invention, a configuration parameter in EMS indicates whether or not the managing NMS supports state change notification. Another configuration parameter in EMS may indicate the type of the It-N object model (e.g. standard-defined or Customer-specific object model, wherein the latter may include modeling of equipment-related resources).

### Use case 1: Itf-N agent event handling for NMS supporting state change notifications

### Sub-case 1.1 Failure of a physical resource leads to operational state change of a dependent logical resource

### Sub-sub-case 1.1.A: Itf-N with standard-defined object model (e.g. 3GPP E-UTRAN NRM) (see Fig. 2)

a) The instance 11 of a vendor-specific physical resource (modeled as object class *VsPhysResX*) within an eNB fails. The NE generates a related alarm and forwards it to the EMS platform.
b) The Itf-N agent within EMS receives the alarm and, since NMS supports a standard-defined object model (without any class modeling physical NE resources), no alarm mapping is done but the alarm is temporarily buffered and a timer (as explained above) is started.
c) As consequence of the physical resource failure, the operational state of the dependent logical resource (instance 44 of the vendor-specific class *VsENodeB* modeling the impacted eNB) changes its value to "disabled". The generated state change notification **related to the dependent logical resource** indicates in the parameter *correlatedNotifications* both, the notification identifier of the "primary" event report (alarm) and the object instance of the failed physical resource.
d) After receiving the state change notification, the Itf-N agent performs the following tasks:
   ▪ Look for, in the EMS events database, the notification with the identifier 123 (as indicated in the received state change notification) and read the value of the alarm parameter *specificProblems;*
   ▪ Map the logical resource from the received state change notification (*VsENodeB=44*) into the corresponding logical resource according to the standardized Itf-N object model (*ENBFunction*=*321*);
   ▪ Generate a state change notification (*operationalState=disabled*) for the mapped logical resource and use the *additionalText* parameter to forward the following substrings: ***availabilityStatus:** dependency, **failedResource:** VsPhysResX=11, **originalSpecificProblem:** 9876>.* Forward this state change notification to NMS (see **1*** in Figure 2).

NMS may recognize unambiguously that an eNB is not operational anymore and also the dependency on the real source of the problem (failed physical resource and its description according to *originalSpecificProblem* value). A trouble ticket for replacement of the failed physical resource may be subsequently generated in NMS, whereas an additional maintenance activity related directly to the failure of the logical resource is not necessary and may not be triggered according to some embodiments of the invention.

### Sub-sub-case 1.1.B: Itf-N with customer specific object model (see Fig. 3)

This use case corresponds to use case 1.1.A above with the following differences:
a) The Itf-N agent receives the alarm and, since NMS supports a customer-specific (Cs) class *CsHwENodeB* modeling a part or the whole equipment of an eNB, it maps the received alarm to a corresponding alarm for this generic equipment instance, using the original *specificProblem* value and indicating in the *additionalText* parameter the **failed resource** *VsPhysResX=11.* The relationship *<notificationIdentifier=123, VsPhysResX=11>* 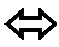 *<notificationIdentifier=1234, CsHwENodeB =321>* is temporarily buffered and the mapped alarm is forwarded to NMS (see **2*** in Figure 3).
b) As consequence of the physical resource failure, the operational state of the dependent logical resource (instance 44 of the vendor-specific class *VsENodeB*) changes its value to "disabled". After receiving the state change notification, the Itf-N agent performs the following tasks:
   ▪ Look for in the correlation buffer the notification with the identifier 123 (as indicated in the received state change notification) and read the values of mapped relationship (*notificationldentifier=1234, CsHwENodeB =321*)
   ▪ Map the logical resource from the received state change notification *(VsENodeB=44*) into the corresponding logical resource of the customer-specific Itf-N object model (*CsENodeB=321*)
   ▪ Generate a state change notification (*operationalState=disabled*) for the mapped logical resource, indicating in the *correlatedNotifications* parameter the relationship to the previously forwarded alarm: "*1234, CsHwENodeB =321*"*.* Forward this state change notification to NMS (see **3*** in Figure 3).

NMS may recognize unambiguously in the alarm the failed physical resource, in the state change notification which eNB is not operational anymore and - due to the provided events correlation - the dependency between the related resources. A trouble ticket for replacement of the failed physical resource may be subsequently generated in NMS, whereas an additional maintenance activity related directly to the failure of the logical resource is not necessary and may not be triggered according to some embodiments of the invention.

### Sub-case 1.2 Failure of a redundant physical resource does not lead to operational state change of a dependent logical resource

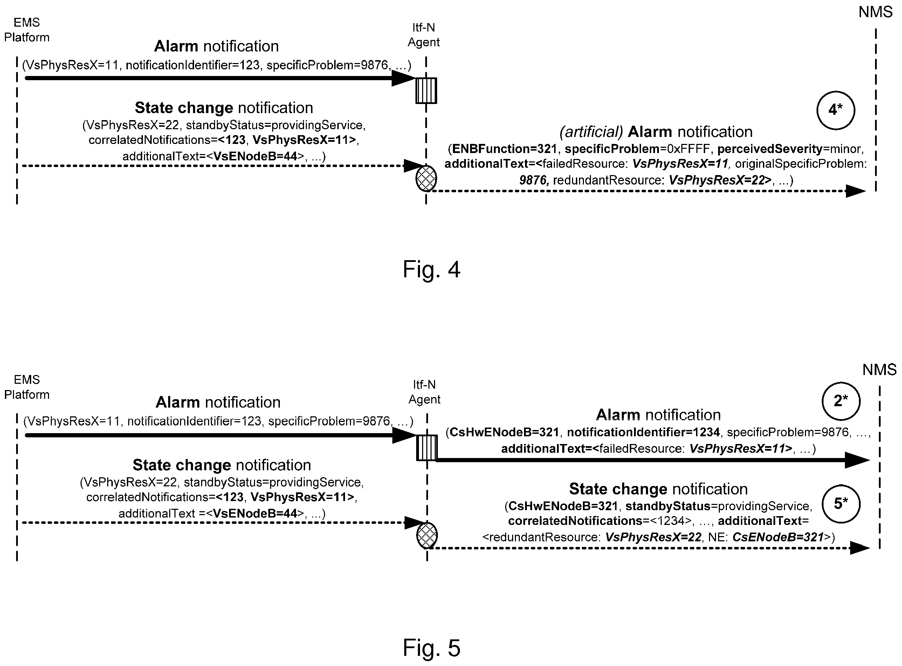

### Sub-sub-case 1.2.A: Itf-N with standard-defined object model (e.g. 3GPP E-UTRAN NRM) (see Fig. 4)

This use case corresponds to use case 1.1.A above with the following differences:
a) Despite the failure of the instance 11 of physical resource *VsPhysResX,* since a redundant resource (*VsPhysResX*=22) is able to take over the further processing, the operational state of the dependent logical resource (instance 44 of the vendor-specific class *VsENodeB)* is still "enabled". The generated state change notification indicates that the *standbyStatus* **of the redundant physical resource** changed to "providingService" and also (by means of the parameter *correlatedNotifications*) the correlation with the previous alarm.
b) After receiving the state change notification, the Itf-N agent performs the following tasks:
   ▪ Look for in the EMS events database the notification with the identifier 123 (as indicated in the received state change notification) and read the value of the parameter *specificProblem*
   ▪ Map the logical resource from the *additionalText* parameter of the received state change notification (*VsENodeB=44*) into the corresponding logical resource of the standardized Itf-N object model (*ENBFunction*=*321*)
   ▪ Since Itf-N object model does not support equipment-related resources, generate an "artificial" alarm notification (with perceived severity value "minor", since functionality is not disturbed) related to the mapped logical resource, using a dedicated value such as **0xFFFF** for the *specificProblem* parameter and indicating in the *additionalText* parameter the following substrings: ***failedResource:** VsPhysResX=11, originalSpecificProblem: 9876, **redundantResource:** VsPhysResX=22>.* The value 0xFFFF is an example value and has the meaning **"*Failed physical resource without functional impact***". Forward this alarm notification to NMS (see **4*** in Figure 4).

NMS is able to recognize unambiguously the current network problem (failed physical resource which needs to be replaced), the redundant resource now providing service and also that related eNB is still operational. A trouble ticket for replacement of the failed physical resource may be subsequently generated in NMS, whereas an additional maintenance activity related directly to the state change of the redundant physical resource is not necessary and may not be triggered according to some embodiments of the invention.

### Sub-sub-case 1.2.B: Itf-N with customer specific object model (see Fig. 5)

This use case corresponds to use case 1.2.A above with the following differences:
a) The Itf-N agent receives the alarm and, since NMS supports a customer-specific class *CsHwENodeB* modeling the whole equipment of an eNB, it maps the received alarm to a corresponding alarm for this equipment instance, using the original *specificProblem* value and indicating in the *additionalText* parameter the failed resource (*VsPhysResX=11*). The relationship *<notificationIdentifier=123, VsPhysResX=11>* 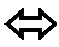 *<notificationIdentifier=1234, CsHwENodeB =321>* is temporarily buffered and the mapped alarm is forwarded to NMS (see **2*** in Figure 5).
b) After receiving the state change notification related to the redundant physical resource, the Itf-N agent performs the following tasks:
   ▪ Look for in the correlation buffer the notification with the identifier 123 (as indicated in the received state change notification) and read the values of mapped relationship (*notificationIdentifier=1234, CsHwENodeB =321*);
   ▪ Map the physical resource from the received state change notification (*VsPhysResX*=22) into the corresponding customer-specific equipment instance of the Itf-N object model (*CsHwENodeB =321*);
   ▪ Generate a state change notification (*standbyStatus=providingService*) for the customer-specific equipment instance, indicating in the *correlatedNotifications* parameter the relationship to the previous alarm "*1234*" (since the correlated alarm previously sent to NMS relates to the same equipment instance *CsHwENodeB =321,* the *correlationNotifications* parameter contains only the notification identifier of the "primary" alarm) and in the *additionalText* the redundant resource (*VsPhysResX=22*) as well as the related eNB instance. Forward this state change notification to NMS (see **5*** in Figure 5).

NMS recognizes unambiguously in the received alarm the failed physical resource (to be replaced), in the state change notification the redundant resource (now in active state) and - due to the correlation data - the dependency between these notifications. A trouble ticket for replacement of the failed physical resource may be subsequently generated in NMS, whereas an additional maintenance activity related directly to the state change of the redundant physical resource is not necessary and may not be triggered according to some embodiments of the invention.

### Sub-case 1.3 Locking a physical resource leads to operational state change of a dependent logical resource

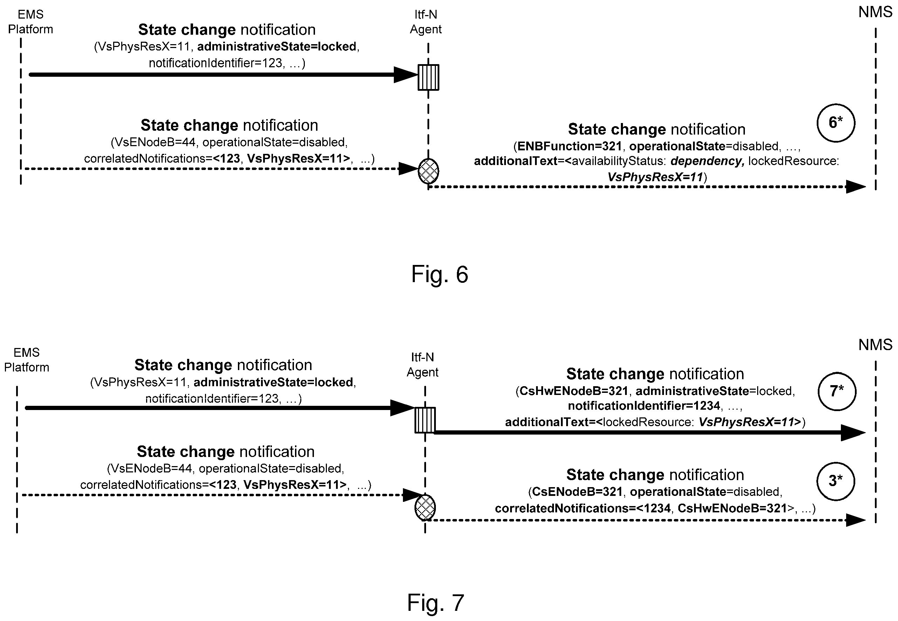

### Sub-sub-case 1.3.A: Itf-N with standard-defined object model (e.g. 3GPP E-UTRAN NRM) (see Fig. 6)

a) The instance 11 of a vendor-specific physical resource within an eNB (modelled as object class *VsPhysResX*) is locked. The NE generates a related state change notification and forwards it to the EMS platform.
b) The Itf-N agent receives the notification and, since NMS supports only a standard-defined object model, no state change mapping is done but the state change notification is temporarily buffered and a timer (as explained above) is started
c) As consequence of locking the physical resource, the operational state of the dependent logical resource (instance 44 of the vendor-specific class *VsENodeB*) changes its value to "disabled". The generated related state change notification indicates in the parameter *correlatedNotifications* both, the notification identifier of the "primary" event report and the object instance of the locked physical resource
d) After receiving the second state change notification, the Itf-N agent performs the following tasks:
   ▪ Look for in the EMS event database the notification with the identifier 123 (as indicated in the received state change notification) and read the value of the parameter *administrativeState;*
   ▪ Map the logical resource from the received state change notification (*VsENodeB=44*) into the corresponding logical resource of the Itf-N object model (*ENBFunction=321*)*;*
   ▪ Generate a state change notification (*operationalState=disabled*) for the mapped logical resource, indicating in the *additionalText* parameter the following substrings: *availabilityStatus: dependency, **lockedResource:** VsPhysResX=11>.* Forward this state change notification to NMS (see **6*** in Figure 6).

NMS may recognize unambiguously which eNB is not operational anymore and also the dependency on the real source of the problem (indicated locked physical resource). Neither a trouble ticket for the locked physical resource, nor an additional maintenance activity related directly to the state change of the logical resource is necessary. Accordingly, NMS according to some embodiments of the invention may not trigger a maintenance activity.

### Sub-sub-case 1.3.B: Itf-N with customer specific object model (see Fig. 7)

This use case corresponds to use case 1.3.A above with the following differences:
a) The Itf-N agent receives the state change notification related to the locking of the physical resource and, since NMS supports a vendor-specific class *CsHwENodeB* modeling the whole equipment of an eNB, it maps the received notification to a corresponding state change for the generic equipment instance, indicating in the *additionalText* parameter the **locked resource** (*VsPhysResX=11*)*.* The relationship *<notificationIdentifier=123, VsPhysResX=11*> 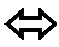 *<notificationldentifier=1234, CsHwENodeB =321>* is temporarily buffered and the mapped state change notification is forwarded to NMS (see **7*** in Figure 7).
b) After receiving the second state change notification (regarding the change of the operational state of the eNB), the Itf-N agent performs the following tasks:
   ▪ Look for in the correlation buffer the notification with the identifier 123 (as indicated in the received state change notification) and read the values of buffered relationship (*notificationIdentifier=1234, CsHwENodeB =321*)
   ▪ Map the logical resource from the received state change notification *(VsENodeB=44)* into the corresponding logical resource (eNB) of the customer-specific Itf-N object model (*CsENodeB=321*)
   ▪ Generate a second state change notification (*operationalState=disabled*) for the mapped logical resource indicating the correlation with the state change notification previously sent to NMS. Forward the second state change notification to NMS (see **3*** in Figure 7).

NMS may recognize unambiguously which NodeB is not operational anymore and also the dependency on the real source of the problem (locked physical resource indicated in the correlated first state change notification). Neither a trouble ticket for the locked physical resource, nor an additional maintenance activity related directly to the state change of the logical resource is necessary. Accordingly, NMS according to some embodiments of the invention may not trigger a maintenance activity.

### Use case 2: Itf-N agent event handling for NMS without support of state change notifications

### Sub-case 2.1 Failure of a physical resource leads to operational state change of a dependent logical resource

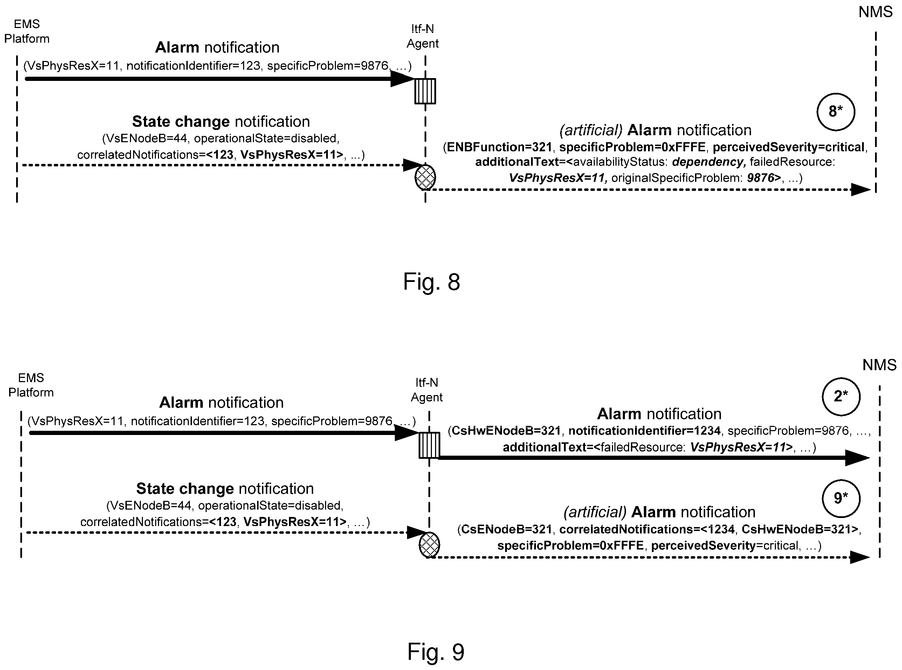

### Sub-sub-case 2.1.A: Itf-N with standard-defined object model (e.g. 3GPP E-UTRAN NRM) (see Fig. 8)

This use case corresponds to use case 1.1.A above with the following differences:
a) After receiving the state change notification (due to operational state change of the eNB), the Itf-N agent performs the following tasks:
   ▪ Since Itf-N object model does not support equipment-related resources and NMS does not support state change notifications, generate an "artificial" alarm notification (with perceived severity value "critical", since the eNodeB is not operational anymore) related to the mapped logical resource, using a dedicated value such as **0xFFFE** for the *specificProblem* parameter and indicating in the *additionalText* parameter the following substrings: *<availabilityStatus: dependency, **failedResource:** VsPhysResX=11*, *originalSpecificProblem: 9876>.* The value 0xFFFE is an example value and has the meaning **"*Non-operational logical resource due to failed physical resource*"*.*** Forward this alarm notification to NMS (see **8*** in Figure 8).

NMS may recognize based on the unambiguous value (such as 0xFFFE) of the *specificProblem* parameter that the indicated eNB instance is not operational anymore and also its dependency on the real source of the problem (failure of the indicated physical resource with description according to *originalSpecificProblem* value). A trouble ticket for replacement of the failed physical resource may be subsequently generated in NMS, whereas an additional maintenance activity related directly to the operational failure of the logical resource is not necessary and may not be triggered according to some embodiments of the invention.

### Sub-sub-case 2.1.B: Itf-N with customer specific object model (see Fig. 9)

This use case corresponds to use case 1.1.B above with the following differences:
a) After receiving the state change notification (due to operational state change of the eNB), the Itf-N agent performs the following tasks:
   ▪ Since NMS does not support state change notifications, generate an "artificial" alarm notification (with perceived severity value "critical", since the eNodeB is not operational anymore) for the mapped logical resource, using the dedicated value such as **0xFFFE** for the *specificProblem* parameter and indicating in the *correlatedNotifications* parameter the relationship to the previously forwarded alarm ("*1234, CsHwENodeB =321"*). Forward this alarm notification to NMS (see **9*** in Figure 9).

NMS may recognize unambiguously in the first alarm the failed physical resource, in the "artificial" alarm notification the eNB that is not operational anymore and - due to the events correlation - the dependency between these resources. A trouble ticket for replacement of the failed physical resource may be subsequently generated in NMS, whereas an additional maintenance activity related directly to the operational failure of the logical resource is not necessary and may not be triggered according to some embodiments of the invention.

### Sub-case 2.2 Failure of a redundant physical resource does not lead to operational state change of a dependent logical resource

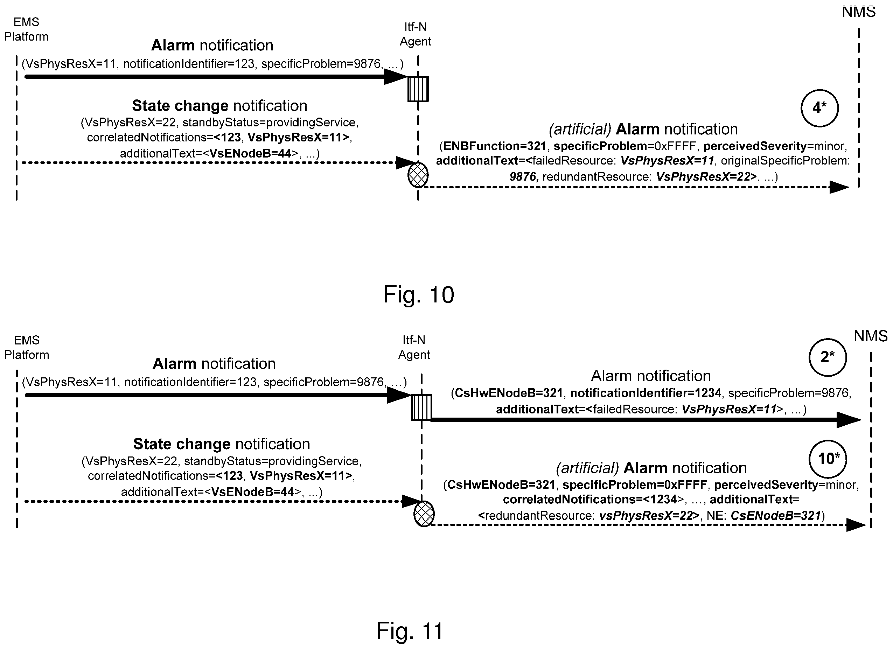

### Sub-sub-case 2.2.A: Itf-N with standard-defined object model (e.g. 3GPP E-UTRAN NRM) (see Fig. 10)

The handling at Itf-N and NMS is the same as described for use-case 1.2.A hereinabove.

### Sub-sub-case 2.2.B: Itf-N with customer specific object model (see Fig. 11)

This use case corresponds to use case 1.2.B above with the following differences:
a) After receiving the state change notification, the Itf-N agent performs the following tasks:
   ▪ Since NMS does not support state change notifications, generate an "artificial" alarm notification (with perceived severity value "minor", since the functionality is not disturbed) for the customer-specific generic equipment instance using a dedicated value such as 0xFFFF for the *specificProblem* parameter. The *correlatedNotifications* parameter contains the relationship to the previous alarm *(notification Identifier 1234*) and the redundant physical resource is indicated in the *additionalText* parameter. Forward this alarm notification to NMS (see **10*** in Figure 11).

NMS may recognize unambiguously in the first alarm the failed physical resource (to be replaced), in the "artificial" alarm notification the redundant resource (now providing service) and - due to the correlation data - the dependency between these notifications. A trouble ticket for replacement of the failed physical resource may be subsequently generated in NMS, whereas an additional maintenance activity related directly to the state change of the redundant physical resource is not necessary and may not be triggered according to some embodiments of the invention.

### Sub-case 2.3 Locking a physical resource leads to operational state change of a dependent logical resource

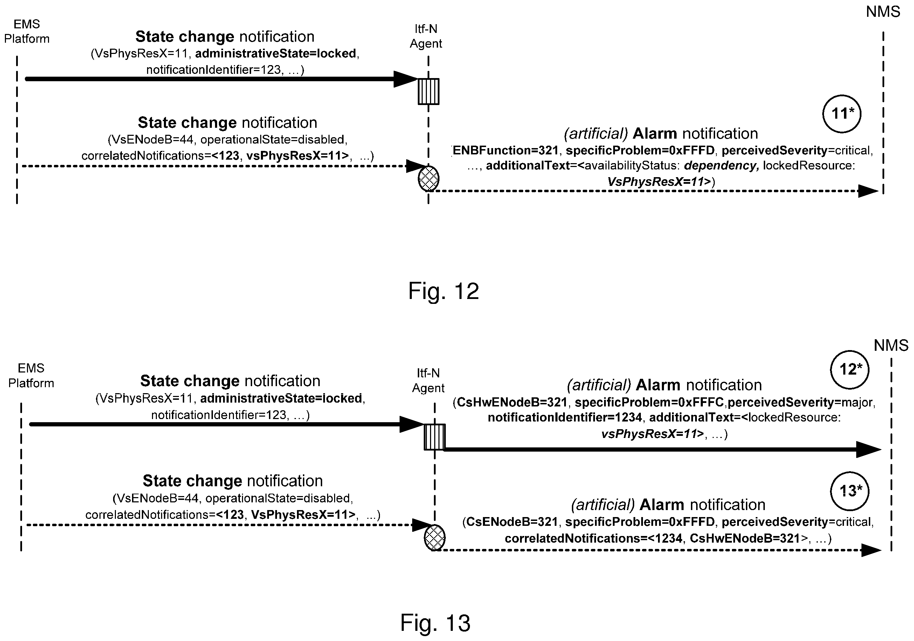

### Sub-sub-case 2.3.A: Itf-N with standard-defined object model (e.g. 3GPP E-UTRAN NRM)(see Fig. 12)

This use case corresponds to use case 1.3.A above with the following differences:
a) After receiving the second state change notification (due to operational state change of the eNB), the Itf-N agent performs the following tasks:
   ▪ Since Itf-N object model does not support equipment-related resources and NMS does not support state change notifications, generate an "artificial" alarm notification (with perceived severity value "critical", since the eNodeB is not operational anymore) related to the mapped logical resource, using a dedicated value such as **0xFFFD** for the *specificProblem* parameter and indicating in the *additionalText* parameter the following substrings: *availabilityStatus: dependency*, ***lockedResource:** VsPhysResX=11>.* The value 0xFFFD is an example value and has the meaning **"*Non-operational logical resource due to locked physical resource*"*.*** Forward this alarm notification to NMS (see **11*** in Figure 12).

NMS recognizes based on the unambiguous value (such as 0xFFFD) of the *specificProblem* parameter that the indicated eNB instance is not operational anymore and also the dependency on the real source of the problem (locked physical resource within eNB). Neither a trouble ticket for the locked physical resource, nor an additional maintenance activity related directly to the state change of the logical resource is necessary. Accordingly, NMS according to some embodiments of the invention may not trigger a maintenance activity.

### Sub-sub-case 2.3.B: Itf-N with customer specific object model (see Fig. 13)

This use case corresponds to use case 1.3.B above with the following differences:
a) The Itf-N agent receives the state change notification related to the locked physical resource and, since Itf-N object model supports a customer-specific class *CsHwENodeB* modeling all physical resources of an eNB but NMS does not support state change notifications, it maps the received notification to an "artificial" alarm (with perceived severity value "major", due to the failure of a physical resource) for the generic equipment instance, indicating in the *additionalText* parameter the locked resource (*VsPhysResX=11*)*.* The used dedicated value **0xFFFC** for the *specificProblem* parameter is an example value and has the meaning **"*Physical resource locked*"*.*** The relationship *<notificationldentifier=123, VsPhysResX=11>* 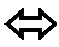 *<notificationldentifier=1234, CsHwENodeB=321>* is temporarily buffered and the mapped alarm notification is forwarded to NMS (see **12*** in Figure 13).
b) After receiving the second state change notification (regarding the operational state change of the logical resource *VsENodeB*)*,* the Itf-N agent performs the following tasks:
   ▪ Since NMS does not support state change notifications, generate an "artificial" alarm notification (with perceived severity value "critical", since the eNodeB is not operational anymore) related to the mapped logical resource, using the dedicated value such as 0xFFFD for the *specificProblem* parameter and indicating in the *correlatedNotification* parameter the eNB operational dependency on the locked physical resource. Forward this second "artificial" alarm notification to NMS (see **13*** in Figure 13).

NMS recognizes unambiguously in the first "artificial" alarm the locked physical resource, in the second one which eNB is not operational anymore and - due to the events correlation - the dependency between these resources. Neither a trouble ticket for the locked physical resource, nor an additional maintenance activity related directly to the state change of the logical resource is necessary. Accordingly, NMS according to some embodiments of the invention may not trigger a maintenance activity.

Fig. 14 shows an algorithm for the Itf-N agent according to an embodiment of the invention covering all the use cases described hereinabove (use cases 1.1.A to 2.3.B). Each indicated notification type corresponds to the number behind the mapped notifications in Figures 2...13 above. The logic corresponds to the structure of use cases, sub-cases, and sub-sub-cases outlined hereinabove.

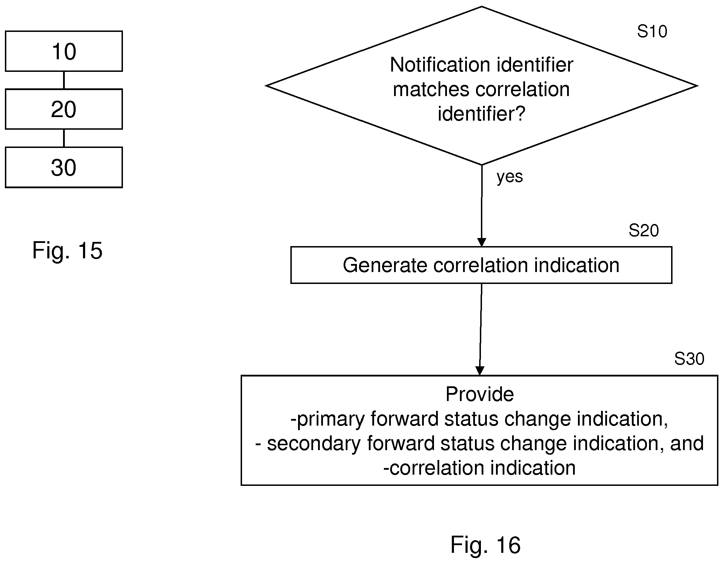

Fig. 15 shows an apparatus according to an embodiment of the invention. The apparatus may be an agent or an element thereof. For example, it may be an EMS or a component thereof, in particular comprising the Itf-N agent. Fig. 16 shows a method according to an embodiment of the invention. The apparatus according to Fig. 15 may perform the method of Fig. 16 but is not limited to this method. The method of Fig. 16 may be performed by the apparatus of Fig. 15 but is not limited to being performed by this apparatus.

The apparatus comprises checking means 10, correlation generating means 20, and providing means 30.

The checking means 10 checks if a notification identifier comprised by a received primary notification and a correlation identifier comprised by a received secondary notification match each other (S10). The primary notification is different from the secondary notification. E.g., the checking means 10 may check if the notification identifier and the correlation identifier have the same value.

If the notification identifier and the correlation identifier match each other ("yes" in step S10), the correlation generating means 20 generates a correlation indication (S20).

Furthermore, if the notification identifier and the correlation identifier match each other ("yes" in step S10), the providing means 30 provides, to a management device such as a NMS, a primary forward status change indication, a secondary forward status change indication, and the correlation indication (S30). The primary forward status change indication is generated based on a primary status change indication comprised in the received primary notification. The secondary forward status change indication is generated based on a secondary status change indication comprised in the received secondary notification. The providing means may provide the primary status change indication, the secondary status change indication, and the correlation indication in one, two, or more notifications, wherein each of the notifications may be an alarm notification or a state change notification.

Step S30 may follow step S20 (as shown in Fig. 16), or providing the primary forward status change indication may be performed before or synchronous with step S10 or before or synchronous with step S20.

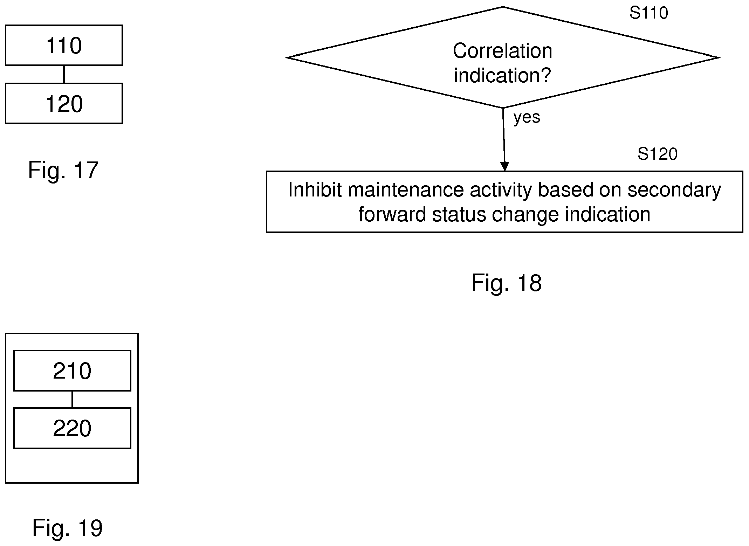

Fig. 17 shows an apparatus according to an embodiment of the invention. The apparatus may be a manager or an element thereof. In particular, it may be an NMS or a component thereof, in particular comprising the southbound interface. Fig. 18 shows a method according to an embodiment of the invention. The apparatus according to Fig. 17 may perform the method of Fig. 18 but is not limited to this method. The method of Fig. 18 may be performed by the apparatus of Fig. 17 but is not limited to being performed by this apparatus.

The apparatus comprises deciding means 110 and inhibiting means 120.

The deciding means 110 decides if at least one received forward notification comprises a correlation indication indicating that a primary status change of a primary entity and a secondary status change of a secondary entity are correlated (S110). The primary status change is indicated by a primary forward status change indication comprised in the at least one received forward notification. The secondary status change is indicated by a secondary forward status change indication comprised in the at least one received forward notification. The primary forward status change indication may be received in a same or a different forward notification than the secondary forward status change indication. Each of the at least one received forward notification may be an alarm notification or a state change notification. There may be one, two, or more received forward notifications. Each of the received forward notifications may comprise one, two, or more forward status change indications, such that the one, two, or more received forward notifications comprise two or more forward status change indications for which the correlation is indicated.

If the at least one received forward notification comprises the correlation indication ("yes" in step S110), the inhibiting means 120 inhibits triggering a secondary maintenance activity based on the secondary forward status change indication (S120). On the other hand, it may or may not trigger a primary maintenance activity based on the primary forward status change indication, depending on the primary forward status change indication.

Fig. 19 shows an apparatus according to an embodiment of the invention. The apparatus comprises at least one processor 210, at least one memory 220 including computer program code, and the at least one processor, with the at least one memory and the computer program code, being arranged to cause the apparatus to at least perform at least one of the methods according to Figs. 16 and 18.

Embodiments of the invention may be employed in any kind of manager-agent interfaces within a management hierarchy. E.g., they may be employed in nodes from which events are forwarded to a higher layer (e.g. from a network element to an element manager or directly to a NMS, or from an element manger to an NMS) and in the respective higher layer. Such nodes may be implemented in various networks. Examples of such networks are 3GPP, CDMA, EDGE, UMTS, GSM, LTE, LTE-A, WiFi networks etc., but also fixed networks such as PSTN, ATM etc.. Also, nodes of a LAN or WAN or of a grid may implement embodiments of the invention. The nodes may be base stations (e.g. eNB, access points, etc.), switches, routers, general purpose computers etc.

A status change may be a change of an alarm state (alarm active / alarm not active) or a change of a state (state change) such as a change of an operational state, an administrative state, or a usage state.

In the context of this application, if one parameter matches another one, this means that the values have a predefined relationship. Preferably, the relationship is surjective; more preferably, the relationship is bijective. For example, the values may be equal, or they may have a predefined difference or quotient.

Embodiments of the invention are described for two correlated events. In other embodiments, more than two events may be correlated. In these cases, the forward information may comprise for each of the events other than the root event an indication of the correlation with the root event. The forward information may be forwarded in one or more notifications, up to the number or events as a maximum, depending on the capability of the higher layer management system (e.g. NMS).

The object model on the Itf-N may be different from that used internally on the agent side (e.g. EMS side), but in some embodiments, both object models may be the same. The former might be useful e.g. in multi-vendor environment, while the latter might be useful e.g. in single vendor environment.

Some embodiments of the invention may support all the use cases including their sub-cases and sub-sub-cases described hereinabove, while other embodiments may support only one or more of the sub-sub-cases of one or more of the sub-cases of one or more of the use cases.

Names of network elements, protocols, methods, parameters, and parameter values are based on current standards, as far as applicable. In other versions or other technologies, the names of these network elements and/or protocols and/or methods and/or parameters and/or parameter values may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on a different software, or some or all of the entities may be based on the same software.

According to the above description, it should thus be apparent that exemplary embodiments of the present invention provide, for example an Itf-N device such as an EMS, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that exemplary embodiments of the present invention provide, for example an Itf-N device such as an NMS, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
checking means (10) adapted to check if a notification identifier comprised by a received primary notification and a correlation identifier comprised by a received secondary notification match each other, wherein the primary notification is different from the secondary notification;
correlation generating means (20) adapted to generate, if the notification identifier and the correlation identifier match each other, a correlation indication;
**characterized by**
providing means (30) adapted to provide, to a management device, if the notification identifier and the correlation identifier match each other, a primary forward status change indication generated based on a primary status change indication comprised in the primary notification, a secondary forward status change indication generated based on a secondary status change indication comprised in the secondary notification, and the correlation indication.

2. The apparatus according to any of claim 1, wherein at least one of the primary status change and the secondary status change is a change of an alarm status.

3. The apparatus according to claim 1, wherein at least one of the primary status change and the secondary status change is a change of an operational state or a change of an administrative state.

4. The apparatus according to claim 1, further comprising
identification generating means adapted to generate a forward notification identification and a forward correlation identification as the correlation indication, wherein the forward correlation identification matches the forward notification identification; wherein
the providing means is adapted to provide the primary forward status change indication and the forward notification identification in a primary forward notification and to provide the secondary forward status change indication and the forward correlation identifier in a following secondary forward notification.

5. The apparatus according to claim 4, wherein the primary forward notification comprises a notification of an alarm, and the secondary forward notification comprises one of a notification of a state change and a notification of an artificial alarm.

6. The apparatus according to claim 1, further comprising
timer means adapted to determine an elapsed time after the timer means has been triggered;
forward identification generating means adapted to generate a primary forward entity identification based on a match of a received identification of the primary entity comprised by the primary notification and at least one predefined identification stored in a data repository;
deciding means adapted to decide whether or not the received identification matches at least one of the predefined identifications;
triggering means adapted to trigger the timer means if at least one of the following takes place: the primary notification is received, and the deciding means has decided that the received identification does not match any of the at least one predefined identification;
monitoring means adapted to monitor if the secondary notification is received when the elapsed time does not exceed a predefined time-out value;
wherein the forward identification generating means is further adapted to generate, if the secondary notification is received when the elapsed time does not exceed the time-out value, the primary forward entity identification based on the received primary notification, the received secondary notification, and one of the predefined identifications, and/or to generate, if the elapsed time exceeds the time-out value before the secondary notification is received, the primary forward entity identification based on the received primary identification and a default mapping; and
the providing means is adapted to provide the primary forward entity identification together with the primary forward status change indication.

7. Apparatus, **characterized by** comprising
deciding means (110) adapted to decide if at least one received forward notification comprises a correlation indication indicating that a primary status change of a primary entity and a secondary status change of a secondary entity are correlated, wherein the primary status change is indicated by a primary forward status change indication comprised in the at least one received forward notification and the secondary status change is indicated by a secondary forward status change indication comprised in the at least one received forward notification;
inhibiting means (120) adapted to inhibit triggering a secondary maintenance activity based on the secondary forward status change indication if the at least one received forward notification comprises the correlation indication.

8. The apparatus according to claim 7, further comprising
triggering means adapted to trigger a primary maintenance activity based on the primary forward status change indication.

9. The apparatus according to claim 7, wherein
the at least one received forward notification comprises a received secondary forward notification and a received primary forward notification, wherein the secondary forward identification comprises the secondary forward entity identification, the secondary forward status change indication, and a forward correlation identification, and the primary forward notification further comprises the primary forward entity identification, the primary forward status change indication, and a forward notification identification; and
the deciding means is adapted to decide that the at least one received forward notification comprises the correlation indication if the forward notification identification matches the forward correlation identification.

10. The apparatus according to claim 7, wherein the obtaining means is adapted to obtain the primary forward status change indication and the secondary forward status change indication from only a single forward notification being the at least one forward notification.

11. Method, comprising
checking (S10) if a notification identifier comprised by a received primary notification and a correlation identifier comprised by a received secondary notification match each other, wherein the primary notification is different from the secondary notification;
generating (S20), if the notification identifier and the correlation identifier match each other, a correlation indication;
**characterized by**
providing (S30), to a management device, if the notification identifier and the correlation identifier match each other, a primary forward status change indication generated based on a primary status change indication comprised in the primary notification, a secondary forward status change indication generated based on a secondary status change indication comprised in the secondary notification, and the correlation indication.

12. The method according to claim 11, wherein the primary entity is a physical device and the secondary entity is a logical entity.

13. The method according to claim 11, wherein at least one of the primary status change and the secondary status change is a change of an alarm status.

14. The method according to claim 11, wherein at least one of the primary status change and the secondary status change is a change of an operational state or a change of an administrative state.

15. The method according to claim 11, further comprising
generating a forward notification identification and a forward correlation identification as the correlation indication, wherein the forward correlation identification matches the forward notification identification; and
providing the primary forward status change indication and the forward notification identification in a primary forward notification and providing the secondary forward status change indication and the forward correlation identifier in a following secondary forward notification.

16. The method according to claim 11, wherein the method comprises providing the primary forward status change indication, the secondary forward status change indication, and the correlation indication in a single forward notification.

17. The method according to claim 16, wherein the single forward notification comprises a notification of an alarm or a notification of a state change.

18. The method according to claim 11, further comprising
determining an elapsed time after a trigger occurred;
generating a primary forward entity identification based on a match of a received identification of the primary entity comprised by the primary notification and at least one predefined identification stored in a data repository;
deciding whether or not the received identification matches at least one of the predefined identifications;
triggering the determining of the elapsed time if at least one of the following takes place: the primary notification is received, and it is decided that the received identification does not match any of the at least one predefined identification;
monitoring if the secondary notification is received when the elapsed time does not exceed a predefined time-out value;
generating, if the secondary notification is received when the elapsed time does not exceed the time-out value, the primary forward entity identification based on the received primary notification, the received secondary notification, and one of the predefined identifications, and/or generating, if the elapsed time exceeds the time-out value before the secondary notification is received, the primary forward entity identification based on the received primary identification and a default mapping; and
providing the primary forward entity identification together with the primary forward status change indication.

19. Method, **characterized by** comprising
deciding (S110) if at least one received forward notification comprises a correlation indication indicating that a primary status change of a primary entity and a secondary status change of a secondary entity are correlated, wherein the primary status change is indicated by a primary forward status change indication comprised in the at least one received forward notification and the secondary status change is indicated by a secondary forward status change indication comprised in the at least one received forward notification;
inhibiting (S120) triggering a secondary maintenance activity based on the secondary forward status change indication if the at least one received forward notification comprises the correlation indication.

20. The method according to claim 19, further comprising
triggering a primary maintenance activity based on the primary forward status change indication.

21. The method according to claim 19, wherein
the at least one received forward notification comprises a received secondary forward notification and a received primary forward notification, wherein the secondary forward identification comprises the secondary forward entity identification, the secondary forward status change indication, and a forward correlation identification, and the primary forward notification further comprises the primary forward entity identification, the primary forward status change indication, and a forward notification identification; and the method comprises
deciding that the at least one received forward notification comprises the correlation indication if the forward notification identification matches the forward correlation identification.

22. The method according to claim 19, further comprising obtaining the primary forward status change indication and the secondary forward status change indication from only a single forward notification being the at least one forward notification.

## Patentansprüche

1. Vorrichtung, die Folgendes umfasst:
eine Prüfeinrichtung (10), die dazu ausgelegt ist zu prüfen, ob eine Benachrichtigungskennung, umfasst von einer empfangenen primären Benachrichtigung, und eine Korrelationskennung, umfasst von einer empfangenen sekundären Benachrichtigung, miteinander übereinstimmen,
wobei die primäre Benachrichtigung sich von der sekundären Benachrichtigung unterscheidet;
eine Korrelationserzeugungseinrichtung (20), die dazu ausgelegt ist, falls die Benachrichtigungskennung und die Korrelationskennung miteinander übereinstimmen, eine Korrelationsangabe zu erzeugen;
**gekennzeichnet durch**
eine Bereitstellungseinrichtung (30), die dazu ausgelegt ist, falls die Benachrichtigungskennung und die Korrelationskennung miteinander übereinstimmen, einer Verwaltungsvorrichtung Folgendes bereitzustellen:
eine primäre Weiterleitungsstatus-Änderungsangabe, erzeugt auf der Basis einer in der primären Benachrichtigung enthaltenen primären Statusänderungsangabe,
eine sekundäre Weiterleitungsstatus-Änderungsangabe, erzeugt auf der Basis einer in der sekundären Benachrichtigung enthaltenen sekundären Statusänderungsangabe, und die Korrelationsangabe.

2. Vorrichtung gemäß einem beliebigen von Anspruch 1,
wobei mindestens eine der primären Statusänderung und der sekundären Statusänderung eine Änderung eines Alarmstatus ist.

3. Vorrichtung gemäß Anspruch 1,
wobei mindestens eine der primären Statusänderung und der sekundären Statusänderung eine Änderung eines Betriebszustands oder eine Änderung eines Verwaltungszustands ist.

4. Vorrichtung gemäß Anspruch 1, die ferner Folgendes umfasst:
eine Identifikationserzeugungseinrichtung, die dazu ausgelegt ist, eine Weiterleitungs-Benachrichtigungsidentifikation und eine Weiterleitungs-Korrelationsidentifikation als die Korrelationsangabe zu erzeugen,
wobei die Weiterleitungs-Korrelationskennung mit der Weiterleitungs-Benachrichtigungskennung übereinstimmt;
wobei die Bereitstellungseinrichtung dazu ausgelegt ist, die primäre Weiterleitungsstatus-Änderungsangabe und die Weiterleitungs-Benachrichtigungsidentifikation in einer primären Weiterleitungsbenachrichtigung bereitzustellen,
und die sekundäre Weiterleitungsstatus-Änderungsangabe und die Weiterleitungs-Korrelationskennung in einer folgenden sekundären Weiterleitungsbenachrichtigung bereitzustellen.

5. Vorrichtung gemäß Anspruch 4,
wobei die primäre Weiterleitungsbenachrichtigung eine Benachrichtigung eines Alarms umfasst, und die sekundäre Weiterleitungsbenachrichtigung eine einer Benachrichtigung einer Zustandsänderung und einer Benachrichtigung eines künstlichen Alarms umfasst.

6. Vorrichtung gemäß Anspruch 1, die ferner Folgendes umfasst:
eine Zeitgebereinrichtung, die dazu ausgelegt ist, eine verstrichene Zeit zu bestimmen, nachdem die Zeitgebereinrichtung ausgelöst worden ist;
eine Weiterleitungs-Identifikationserzeugungseinrichtung, die dazu ausgelegt ist, eine primäre Weiterleitungseinheitsidentifikation auf der Basis einer Übereinstimmung einer empfangenen Identifikation der primären Einheit, die von der primären Benachrichtigung umfasst wird, und mindestens einer vordefinierten Identifikation, die in einem Datendepot gespeichert ist, zu erzeugen;
eine Entscheidungseinrichtung, die dazu ausgelegt ist, zu entscheiden, ob die empfangene Identifikation mit mindestens einer der vordefinierten Identifikationen übereinstimmt oder nicht;
eine Auslösungseinrichtung, die dazu ausgelegt ist, die Zeitgebereinrichtung auszulösen, falls mindestens eines der folgenden Ereignisse stattfindet:
die primäre Benachrichtigung wird empfangen, und die Entscheidungseinrichtung hat entschieden, dass die empfangene Identifikation nicht mit einer der mindestens einen vordefinierten Identifikation übereinstimmt;
eine Überwachungseinrichtung, die dazu ausgelegt ist, zu überwachen, ob die sekundäre Benachrichtigung empfangen wird, wenn die verstrichene Zeit nicht einen vordefinierten Zeitüberschreitungswert überschreitet;
wobei die Weiterleitungs-Identifikationserzeugungseinrichtung ferner dazu ausgelegt ist, falls die sekundäre Benachrichtigung empfangen wird, wenn die verstrichene Zeit nicht den Zeitüberschreitungswert überschreitet, Folgendes zu erzeugen:
die primäre Weiterleitungseinheitsidentifikation auf der Basis der empfangenen primären Benachrichtigung, die empfangene sekundäre Benachrichtigung, und eine der vordefinierten Identifikationen, und/oder, falls die verstrichene Zeit den Zeitüberschreitungswert überschreitet, bevor die sekundäre Benachrichtigung empfangen wird, Folgendes zu erzeugen:
die primäre Weiterleitungseinheitsidentifikation auf der Basis der empfangenen primären Benachrichtigung sowie eine Standardzuordnung; und
die Bereitstellungseinrichtung dazu ausgelegt ist, die primäre Weiterleitungseinheitsidentifikation zusammen mit der primären Weiterleitungsstatus-Änderungsangabe bereitzustellen.

7. Vorrichtung, **dadurch gekennzeichnet, dass** sie Folgendes umfasst:
eine Entscheidungseinrichtung (110), die dazu ausgelegt ist zu entscheiden, ob zumindest eine empfangene Weiterleitungsbenachrichtigung eine Korrelationsangabe enthält, die angibt, dass eine primäre Statusänderung einer primären Einheit und eine sekundäre Statusänderung einer sekundären Einheit korreliert sind,
wobei die primäre Statusänderung durch eine primäre Weiterleitungsstatus-Änderungsangabe angegeben wird, die in der mindestens einen empfangenen Weiterleitungsbenachrichtigung enthalten ist,
und die sekundäre Statusänderung durch eine sekundäre Weiterleitungsstatus-Änderungsangabe angegeben wird, die in der mindestens einen empfangenen Weiterleitungsbenachrichtigung enthalten ist;
eine Sperreinrichtung (120), die dazu ausgelegt ist, die Auslösung einer sekundären Wartungsaktivität auf der Basis der sekundären Weiterleitungsstatus-Änderungsangabe zu sperren, falls die mindestens eine empfangene Weiterleitungsbenachrichtigung die Korrelationsangabe enthält.

8. Vorrichtung gemäß Anspruch 7, die ferner Folgendes umfasst:
eine Auslöseeinrichtung, die dazu ausgelegt ist, eine primäre Wartungsaktivität auf der Basis der primären Weiterleitungsstatus-Änderungsangabe auszulösen.

9. Vorrichtung gemäß Anspruch 7,
wobei die mindestens eine empfangene Weiterleitungsbenachrichtigung eine empfangene sekundäre Weiterleitungsbenachrichtigung und eine empfangene primäre Weiterleitungsbenachrichtigung umfasst,
wobei die sekundäre Weiterleitungsidentifikation die sekundäre Weiterleitungseinheitsidentifikation, die sekundäre Weiterleitungsstatus-Änderungsangabe und eine Weiterleitungs-Korrelationsidentifikation umfasst,
und die primäre Weiterleitungsbenachrichtigung ferner die primäre Weiterleitungseinheitsidentifikation, die primäre Weiterleitungsstatus-Änderungsangabe und eine Weiterleitungs-Benachrichtigungsidentifikation umfasst; und
die Entscheidungseinrichtung dazu ausgelegt ist zu entscheiden, dass die mindestens eine empfangene Weiterleitungsbenachrichtigung die Korrelationsangabe enthält, falls die Weiterleitungs-Benachrichtigungsidentifikation mit der Weiterleitungs-Korrelationsidentifikation übereinstimmt.

10. Vorrichtung gemäß Anspruch 7,
wobei die Erhaltungseinrichtung dazu ausgelegt ist, die primäre Weiterleitungsstatus-Änderungsangabe und die sekundäre Weiterleitungsstatus-Änderungsangabe von nur einer einzelnen Weiterleitungsbenachrichtigung zu erhalten, die die mindestens eine Weiterleitungsbenachrichtigung ist.

11. Verfahren, das Folgendes umfasst:
Prüfen (S10), ob eine Benachrichtigungskennung, umfasst von einer empfangenen primären Benachrichtigung, und eine Korrelationskennung, umfasst von einer empfangenen sekundären Benachrichtigung, miteinander übereinstimmen,
wobei die primäre Benachrichtigung sich von der sekundären Benachrichtigung unterscheidet;
Erzeugen (S20), falls die Benachrichtigungskennung und die Korrelationskennung miteinander übereinstimmen, einer Korrelationsangabe;
**gekennzeichnet durch**
Bereitstellen (S30), für eine Verwaltungsvorrichtung, falls die Benachrichtigungskennung und die Korrelationskennung miteinander übereinstimmen,
einer primären Weiterleitungsstatus-Änderungsangabe, erzeugt auf der Basis einer in der primären Benachrichtigung enthaltenen primären Statusänderungsangabe,
einer sekundären Weiterleitungsstatus-Änderungsangabe, erzeugt auf der Basis einer in der sekundären Benachrichtigung enthaltenen sekundären Statusänderungsangabe, und der Korrelationsangabe.

12. Verfahren gemäß Anspruch 11,
wobei die primäre Einheit ein physisches Gerät ist und die sekundäre Einheit eine logische Einheit ist.

13. Verfahren gemäß Anspruch 11,
wobei mindestens eine der primären Statusänderung und der sekundären Statusänderung eine Änderung eines Alarmstatus ist.

14. Verfahren gemäß Anspruch 11,
wobei mindestens eine der primären Statusänderung und der sekundären Statusänderung eine Änderung eines Betriebszustands oder eine Änderung eines Verwaltungszustands ist.

15. Verfahren gemäß Anspruch 11, das ferner Folgendes umfasst:
Erzeugen einer Weiterleitungs-Benachrichtigungsidentifikation und einer Weiterleitungs-Korrelationsidentifikation als die Korrelationsangabe,
wobei die Weiterleitungs-Korrelationsidentifikation mit der Weiterleitungs-Benachrichtigungsidentifikation übereinstimmt; und
Bereitstellen der primären Weiterleitungsstatus-Änderungsangabe und der Weiterleitungs-Benachrichtigungsidentifikation in einer primären Weiterleitungsbenachrichtigung, und
Bereitstellen der sekundären Weiterleitungsstatus-Änderungsangabe und der Weiterleitungs-Korrelationskennung in einer folgenden sekundären Weiterleitungsbenachrichtigung.

16. Verfahren gemäß Anspruch 11,
wobei das Verfahren das Bereitstellen der primären Weiterleitungsstatus-Änderungsangabe, der sekundären Weiterleitungsstatus-Änderungsangabe und der Korrelationsangabe in einer einzelnen Weiterleitungsbenachrichtigung umfasst.

17. Verfahren gemäß Anspruch 16,
wobei die einzelne Weiterleitungsbenachrichtigung eine Benachrichtigung eines Alarms oder eine Benachrichtigung einer Zustandsänderung enthält.

18. Verfahren gemäß Anspruch 11, das ferner Folgendes umfasst:
Bestimmen einer verstrichenen Zeit, nachdem eine Auslösung aufgetreten ist;
Erzeugen einer primären Weiterleitungseinheitsidentifikation auf der Basis einer Übereinstimmung einer empfangenen Identifikation der primären Einheit, die von der primären Benachrichtigung umfasst wird, und mindestens einer vordefinierten Identifikation, die in einem Datendepot gespeichert ist;
Entscheiden, ob die empfangene Identifikation mit mindestens einer der vordefinierten Identifikationen übereinstimmt oder nicht;
Auslösen der Bestimmung der verstrichenen Zeit, falls mindestens eines der folgenden Ereignisse stattfindet:
die primäre Benachrichtigung wird empfangen, und es wird entschieden, dass die empfangene Identifikation nicht mit einer der mindestens einen vordefinierten Identifikation übereinstimmt;
Überwachen, ob die sekundäre Benachrichtigung empfangen wird, wenn die verstrichene Zeit nicht einen vordefinierten Zeitüberschreitungswert überschreitet;
Erzeugen, falls die sekundäre Benachrichtigung empfangen wird, wenn die verstrichene Zeit nicht den Zeitüberschreitungswert überschreitet, der primären Weiterleitungseinheitsidentifikation auf der Basis der empfangenen primären Benachrichtigung, der empfangenen sekundären Benachrichtigung, und einer der vordefinierten Identifikationen, und/oder
Erzeugen, falls die verstrichene Zeit den Zeitüberschreitungswert überschreitet, bevor die sekundäre Benachrichtigung empfangen wird, der primären Weiterleitungseinheitsidentifikation auf der Basis der empfangenen primären Identifikation sowie einer Standardzuordnung; und
Bereitstellen der primären Weiterleitungseinheitsidentifikation zusammen mit der primären Weiterleitungsstatus-Änderungsangabe.

19. Verfahren, **dadurch gekennzeichnet, dass** es Folgendes umfasst:
Entscheiden (S110), ob zumindest eine empfangene Weiterleitungsbenachrichtigung eine Korrelationsangabe enthält, die angibt, dass eine primäre Statusänderung einer primären Einheit und eine sekundäre Statusänderung einer sekundären Einheit korreliert sind,
wobei die primäre Statusänderung durch eine primäre Weiterleitungsstatus-Änderungsangabe angegeben wird, die in der mindestens einen empfangenen Weiterleitungsbenachrichtigung enthalten ist, und
die sekundäre Statusänderung durch eine sekundäre Weiterleitungsstatus-Änderungsangabe angegeben wird, die in der mindestens einen empfangenen Weiterleitungsbenachrichtigung enthalten ist;
Sperren (S120) der Auslösung einer sekundären Wartungsaktivität auf der Basis der sekundären Weiterleitungsstatus-Änderungsangabe, falls die mindestens eine empfangene Weiterleitungsbenachrichtigung die Korrelationsangabe enthält.

20. Verfahren gemäß Anspruch 19, das ferner Folgendes umfasst:
Auslösen einer primären Wartungsaktivität auf der Basis der primären Weiterleitungsstatus-Änderungsangabe.

21. Verfahren gemäß Anspruch 19,
wobei die mindestens eine empfangene Weiterleitungsbenachrichtigung eine empfangene sekundäre Weiterleitungsbenachrichtigung und eine empfangene primäre Weiterleitungsbenachrichtigung umfasst,
wobei die sekundäre Weiterleitungsidentifikation die sekundäre Weiterleitungseinheitsidentifikation, die sekundäre Weiterleitungsstatus-Änderungsangabe und eine Weiterleitungs-Korrelationsidentifikation umfasst, und
die primäre Weiterleitungsbenachrichtigung ferner die primäre Weiterleitungseinheitsidentifikation, die primäre Weiterleitungsstatus-Änderungsangabe und eine Weiterleitungs-Benachrichtigungsidentifikation umfasst;
das Verfahren das Entscheiden beinhaltet, dass die mindestens eine empfangene Weiterleitungsbenachrichtigung die Korrelationsangabe enthält, falls die Weiterleitungs-Benachrichtigungsidentifikation mit der Weiterleitungs-Korrelationsidentifikation übereinstimmt.

22. Verfahren gemäß Anspruch 19, das ferner Folgendes umfasst:
Erhalten der primären Weiterleitungsstatus-Änderungsangabe und der sekundären Weiterleitungsstatus-Änderungsangabe von nur einer einzelnen Weiterleitungsbenachrichtigung, die die mindestens eine Weiterleitungsbenachrichtigung ist.

## Revendications

1. Appareil, comprenant
un moyen de vérification (10) conçu pour vérifier si un identifiant de notification constitué par une notification primaire reçue et un identifiant de corrélation constitué par une notification secondaire reçue coïncident entre eux, dans lequel la notification primaire est différente de la notification secondaire ; un moyen de génération de corrélation (20) conçu pour générer, si l'identifiant de notification et l'identifiant de corrélation coïncident entre eux, une indication de corrélation ;
**caractérisé par**
un moyen de fourniture (30) conçu pour fournir à un dispositif de gestion, si l'identifiant de notification et l'identifiant de corrélation coïncident entre eux, une indication primaire retransmise de changement d'état générée sur la base d'une indication primaire de changement d'état figurant dans la notification primaire, une indication secondaire retransmise de changement d'état générée sur la base d'une indication secondaire de changement d'état figurant dans la notification secondaire, et l'indication de corrélation.

2. Appareil selon la revendication 1, dans lequel au moins l'un du changement d'état primaire et du changement d'état secondaire est un changement d'un état d'alarme.

3. Appareil selon la revendication 1, dans lequel au moins l'un du changement d'état primaire et du changement d'état secondaire est un changement d'un état de fonctionnement ou un changement d'un état administratif.

4. Appareil selon la revendication 1, comprenant en outre
un moyen de génération d'identification conçu pour générer une identification retransmise de notification et une identification retransmise de corrélation en tant qu'indication de corrélation, dans lequel l'identification retransmise de corrélation coïncide avec l'identification retransmise de notification ; dans lequel
le moyen de fourniture est conçu pour fournir l'indication primaire retransmise de changement d'état et l'identification retransmise de notification dans une notification primaire retransmise et pour fournir l'indication secondaire retransmise de changement d'état et l'identifiant retransmis de corrélation dans une notification secondaire retransmise suivante.

5. Appareil selon la revendication 4, dans lequel la notification primaire retransmise comprend une notification d'une alarme, et la notification secondaire retransmise comprend une notification d'un changement d'état et une notification d'une alarme artificielle.

6. Appareil selon la revendication 1, comprenant en outre
un moyen de temporisation conçu pour déterminer un temps écoulé après que le moyen de temporisation a été déclenché ;
un moyen de génération d'identification retransmise conçu pour générer une identification primaire retransmise d'entité sur la base d'une coïncidence entre une identification reçue de l'entité primaire constituée par la notification primaire et au moins une identification prédéfinie stockée dans un référentiel de données ;
un moyen de décision conçu pour décider si l'identification reçue coïncide ou non avec au moins l'une des identifications prédéfinies ;
un moyen de déclenchement conçu pour déclencher le moyen de temporisation si au moins l'une des situations suivantes se produit : la notification primaire est reçue, et le moyen de décision a décidé que l'identification reçue ne coïncide avec aucune desdites au moins une identifications prédéfinies ;
un moyen de surveillance conçu pour surveiller si la notification secondaire est reçue lorsque le temps écoulé ne dépasse pas une valeur de temps limite prédéfinie ; dans lequel le moyen de génération d'identification retransmise est en outre conçu pour générer, si la notification secondaire est reçue lorsque le temps écoulé ne dépasse pas la valeur de temps limite, l'identification primaire retransmise d'entité sur la base de la notification primaire reçue, de la notification secondaire reçue, et de l'une des identifications prédéfinies, et/ou pour générer, si le temps écoulé dépasse la valeur de temps limite avant que la notification secondaire soit reçue, l'identification primaire retransmise d'entité sur la base de l'identification primaire reçue et d'une mise en correspondance par défaut ; et
le moyen de fourniture est conçu pour fournir l'identification primaire retransmise d'entité conjointement avec l'indication primaire retransmise de changement d'état.

7. Appareil, **caractérisé en ce qu'**il comprend un moyen de décision (110) conçu pour décider si au moins une notification retransmise reçue comprend une indication de corrélation indiquant qu'un changement d'état primaire d'une entité primaire et un changement d'état secondaire d'une entité secondaire sont corrélés, dans lequel le changement d'état primaire est indiqué par une indication primaire retransmise de changement d'état figurant dans ladite au moins une notification retransmise reçue et le changement d'état secondaire est indiqué par une indication secondaire retransmise de changement d'état figurant dans ladite au moins une notification retransmise reçue ;
un moyen d'inhibition (120) conçu pour inhiber le déclenchement d'une activité de maintenance secondaire sur la base de l'indication secondaire retransmise de changement d'état si ladite au moins une notification retransmise reçue comprend l'indication de corrélation.

8. Appareil selon la revendication 7, comprenant en outre un moyen de déclenchement conçu pour déclencher une activité primaire de maintenance sur la base de l'indication primaire retransmise de changement d'état.

9. Appareil selon la revendication 7, dans lequel ladite au moins une notification retransmise reçue comprend une notification secondaire retransmise reçue et une notification primaire retransmise reçue, dans lequel l'identification secondaire retransmise comprend l'identification secondaire retransmise d'entité, l'indication secondaire retransmise de changement d'état, et une identification retransmise de corrélation, et la notification primaire retransmise comprend en outre l'identification primaire retransmise d'entité, l'indication primaire retransmise de changement d'état, et une identification retransmise de notification ; et le moyen de décision est conçu pour décider que ladite au moins une notification retransmise reçue comprend l'indication de corrélation si l'identification retransmise de notification coïncide avec l'identification retransmise de corrélation.

10. Appareil selon la revendication 7, dans lequel le moyen d'obtention est conçu pour obtenir l'indication primaire retransmise de changement d'état et l'indication secondaire retransmise de changement d'état à partir d'une notification retransmise unique qui est ladite au moins une notification retransmise.

11. Procédé, comprenant
la vérification (S10) de la coïncidence ou non entre un identifiant de notification constitué par une notification primaire reçue et un identifiant de corrélation constitué par une notification secondaire reçue, dans lequel la notification primaire est différente de la notification secondaire ;
la génération (S20), si l'identifiant de notification et l'identifiant de corrélation coïncident entre eux, d'une indication de corrélation ;
**caractérisé par**
la fourniture (S30), à un dispositif de gestion, si l'identifiant de notification et l'identifiant de corrélation coïncident entre eux, d'une indication primaire retransmise de changement d'état générée sur la base d'une indication primaire de changement d'état figurant dans la notification primaire, d'une indication secondaire retransmise de changement d'état générée sur la base d'une indication secondaire de changement d'état figurant dans la notification secondaire, et de l'indication de corrélation.

12. Procédé selon la revendication 11, dans lequel l'entité primaire est un dispositif physique et l'entité secondaire est une entité logique.

13. Procédé selon la revendication 11, dans lequel au moins l'un du changement d'état primaire et du changement d'état secondaire est un changement d'un état d'alarme.

14. Procédé selon la revendication 11, dans lequel au moins l'un du changement d'état primaire et du changement d'état secondaire est un changement d'un état de fonctionnement ou un changement d'un état administratif.

15. Procédé selon la revendication 11, comprenant en outre
la génération d'une identification retransmise de notification et d'une identification retransmise de corrélation en tant qu'indication de corrélation, dans lequel l'identification retransmise de corrélation coïncide avec l'identification retransmise de notification ; et
la fourniture de l'indication primaire retransmise de changement d'état et de l'identification retransmise de notification dans une notification primaire retransmise et la fourniture de l'indication secondaire retransmise de changement d'état et de l'identification retransmise de corrélation dans une notification secondaire retransmise suivante.

16. Procédé selon la revendication 11, dans lequel le procédé comprend la fourniture de l'indication primaire retransmise de changement d'état, de l'indication secondaire retransmise de changement d'état et de l'indication de corrélation dans une notification retransmise unique.

17. Procédé selon la revendication 16, dans lequel la notification retransmise unique comprend une notification d'une alarme ou une notification d'un changement d'état.

18. Procédé selon la revendication 11, comprenant en outre
la détermination d'un temps écoulé après qu'un déclenchement s'est produit ;
la génération d'une identification primaire retransmise d'entité sur la base d'une coïncidence entre une identification primaire d'entité reçue constituée par la notification primaire et au moins une identification prédéfinie stockée dans un référentiel de données ;
la décision du fait que l'identification reçue correspond ou non à au moins l'une des identifications prédéfinies ; le déclenchement de la détermination du temps écoulé si au moins l'une des situations suivantes se produit : la notification primaire est reçue, et il est décidé que l'identification reçue ne coïncide avec aucune desdites au moins une identifications prédéfinies ;
la surveillance du fait de savoir si la notification secondaire est reçue lorsque le temps écoulé ne dépasse pas une valeur de temps limite prédéfinie ;
la génération, si la notification secondaire est reçue lorsque le temps écoulé ne dépasse pas la valeur de temps limite, de l'identification primaire retransmise d'entité sur la base de la notification primaire reçue, de la notification secondaire reçue et de l'une des identifications prédéfinies, et/ou la génération, si le temps écoulé dépasse la valeur de temps limite avant que la notification secondaire soit reçue, de l'identification primaire retransmise d'entité sur la base de l'identification primaire reçue et d'une mise en correspondance par défaut ; et
la fourniture de l'identification primaire retransmise d'entité avec l'indication primaire retransmise de changement d'état.

19. Procédé, **caractérisé en ce qu'**il comprend la décision (S110) du fait de savoir si au moins une notification retransmise reçue comprend une indication de corrélation indiquant qu'un changement d'état primaire d'une entité primaire et un changement d'état secondaire d'une entité secondaire sont corrélés, dans lequel le changement d'état primaire est indiqué par une indication primaire retransmise de changement d'état figurant dans ladite au moins une notification retransmise reçue et le changement d'état secondaire est indiqué par une indication secondaire retransmise de changement d'état figurant dans ladite au moins une notification retransmise reçue ;
l'inhibition (S120) du déclenchement d'une activité de maintenance secondaire sur la base de l'indication secondaire retransmise de changement d'état si ladite au moins une notification retransmise reçue comprend l'indication de corrélation.

20. Procédé selon la revendication 19, comprenant en outre le déclenchement d'une activité primaire de maintenance sur la base de l'indication primaire retransmise de changement d'état.

21. Procédé selon la revendication 19, dans lequel ladite au moins une notification retransmise reçue comprend une notification secondaire retransmise reçue et une notification primaire retransmise reçue, dans lequel l'identification secondaire retransmise comprend l'identification secondaire retransmise d'entité, l'indication secondaire retransmise de changement d'état et une identification retransmise de corrélation, et la notification primaire retransmise comprend en outre l'identification primaire retransmise d'entité, l'indication primaire retransmise de changement d'état et une identification retransmise de notification ; et le procédé comprend
la décision du fait que ladite au moins une notification retransmise reçue comprend l'indication de corrélation si l'identification retransmise de notification coïncide avec l'identification retransmise de corrélation.

22. Procédé selon la revendication 19, comprenant en outre l'obtention de l'indication primaire retransmise de changement d'état et de l'indication secondaire retransmise de changement d'état à partir d'une notification retransmise unique qui est ladite au moins une notification retransmise.
